# EUROPEAN PATENT APPLICATION

(11) **EP 4 848 660 A1**
(43) Date of publication of application: **02.12.2026**
(21) Application number: 26176698.4
(22) Date of filing: 05.05.2026
(51) Int. Cl.: H04L 9/40, G06F 21/55

(54) **POTENTIALLY MALICIOUS ENTITY IDENTIFICATION BASED ON CONVERSATION ACCEPTANCE AND/OR DENIAL RATIO(S)**

(30) Priority: 29.05.2025 US 202519222768
(71) Applicant: Microsoft Technology Licensing, LLC, Redmond, WA 98052 (US)
(72) Inventor: EDRY, Dor, Redmond, 98052-6399 (US); KOREN, Adi, Redmond, 98052-6399 (US); OREN, Uri Yehuda, Redmond, 98052-6399 (US)
(74) Representative: CMS Cameron McKenna Nabarro Olswang LLP

(57) **Abstract**

Techniques are described herein that are capable of identifying a potentially malicious entity based on conversation acceptance and/or denial ratio(s). A number of conversation initiation events, a number of acceptance events, and/or a number of denial events in a plurality of system-generated event logs, is determined. The conversation initiation events result from a particular entity initiating conversations. The user acceptance events result from acceptance of at least a subset of the conversations. The user denial events result from denial of at least a subset of the conversations. A response ratio is determined using a first number selected from those mentioned above and a second number selected from those mentioned above. The particular entity is identified as a potentially malicious entity as a result of the response ratio satisfying a criterion. A security action is performed with regard to the potentially malicious entity.

## Description

### BACKGROUND

Malicious entities often attempt to exploit systems. For instance, a malicious entity may identify a vulnerability in a system and use the vulnerability to gain access to the system. Such systems include communication systems. A phishing attack is one technique that is used by malicious entities to infiltrate systems.

### SUMMARY

It may be desirable to determine whether an entity that utilizes a communication platform is potentially malicious by analyzing system-generated event logs that include events associated with the entity. A system-generated event log is an event log that is generated by a computing system or by code (e.g., software) running on the computing system. Accordingly, the system-generated event log is not generated by a human. Although actions of a human may trigger a computing system to generate events in a system-generated event log, the human generates neither the event log nor the events therein. An event log is a log (e.g., a record or a description) of events. An event is a message that indicates occurrence of an action (e.g., an asynchronous action or a synchronous action). For instance, the action may involve an entity sending a request for a conversation, a recipient of the request accepting the conversation, or the recipient of the request denying (e.g., refusing) the conversation. An entity is anything that triggers an event. For instance, the entity may be a human, a group of humans, a computing system, or a process (e.g., an application) that executes on a computing system.

In an aspect, the system-generated event logs are not capable of being easily manipulated by a malicious entity. For instance, the system-generated event logs may be immutable, meaning that the system-generated event logs are not capable of or susceptible to change (e.g., by the malicious entity). A malicious entity is an entity that intentionally causes (or tries to cause or is configured to cause) harm to a system and/or a user of the system. In an example, the system is a computing system (e.g., a personal computer, a server, or an Internet of things (IoT) device), a network, a router, a switch, or a firewall. In another example, the harm is an unauthorized or illegal access to the system. In yet another example, the harm results from the malicious entity initiating, enabling, or participating in a cyberattack, such as a phishing attack.

In another aspect, the system-generated logs indicate a number of conversation requests that are sent by the entity using the communication platform, a number of the conversation requests that are accepted by recipients of the conversation requests, and/or a number of the conversation requests that are denied by recipients of the conversation recipients. By analyzing any combination of these numbers, a determination may be made whether the entity is potentially malicious. In an example, a proportion of the conversation requests that are accepted being less than a reference proportion indicates that the entity is potentially malicious. In another example, a proportion of the conversation requests that are denied being greater than a reference proportion indicates that the entity is potentially malicious. In yet another example, a value, which is determined using the number of the conversation requests that are accepted and the number of the conversation requests that are denied, being less than a reference value indicates that the entity is potentially malicious.

Various approaches are described herein for, among other things, identifying a potentially malicious entity based on (e.g., based at least on) conversation acceptance and/or denial ratio(s). A potentially malicious entity is an entity that is potentially a malicious entity. In an aspect, the entity is deemed to be a potentially malicious entity as a result of a likelihood that the entity is a malicious entity being greater than or equal to a likelihood threshold. In an example of this aspect, a proportion of conversation requests from an entity that are accepted being less than a first threshold, a proportion of the conversation requests that are denied being greater than a second threshold, and/or the number of the conversations that are accepted divided by the number of the conversations that are denied being less than a third threshold indicates that the entity is the potentially malicious entity.

In a first example approach, a first number of conversation initiation events in a plurality of system-generated event logs is determined. The conversation initiation events result from a particular entity initiating conversations. A second number of user acceptance events in the plurality of system-generated event logs is determined. The user acceptance events result from acceptance of identified conversations, which are comprised in the conversations initiated by the particular entity. An acceptance ratio, which indicates a proportion of the conversations that are accepted, is determined using the first number and the second number. As a result of the acceptance ratio being less than or equal to a threshold acceptance ratio, the particular entity is identified as a potentially malicious entity. As a result of identifying the particular entity as the potentially malicious entity, a security action is performed with regard to the potentially malicious entity.

In a second example approach, a first number of conversation initiation events in a plurality of system-generated event logs is determined. The conversation initiation events result from a particular entity initiating conversations. A second number of user denial events in the plurality of system-generated event logs is determined. The user denial events result from denial of designated conversations, which are comprised in the conversations initiated by the particular entity. A denial ratio, which indicates a proportion of the conversations that are denied, is determined using the first number and the second number. As a result of the denial ratio being greater than or equal to a threshold denial ratio, the particular entity is identified as a potentially malicious entity. As a result of identifying the particular entity as the potentially malicious entity, a security action is performed with regard to the potentially malicious entity.

In a third example approach, a first number of user acceptance events in a plurality of system-generated event logs is determined. The user acceptance events result from acceptance of first conversations in a plurality of conversations initiated by a particular entity. A second number of user denial events in the plurality of system-generated event logs is determined. The user denial events result from denial of second conversations in the plurality of conversations initiated by the particular entity. An acceptance-denial ratio, which indicates a comparison of a first determined number of the conversations that are accepted and a second determined number of the conversations that are denied, is determined using the first number and the second number. The first number and the first determined number are same. The second number and the second determined number are same. As a result of the acceptance-denial ratio being less than or equal to a threshold acceptance-denial ratio, the particular entity is identified as a potentially malicious entity. As a result of identifying the particular entity as the potentially malicious entity, a security action is performed with regard to the potentially malicious entity.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the invention is not limited to the specific embodiments described in the Detailed Description and/or other sections of this document. Such embodiments are presented herein for illustrative purposes only. Additional embodiments will be apparent to persons skilled in the relevant art(s) based on the teachings contained herein.

### BRIEF DESCRIPTION OF THE DRAWINGS

The accompanying drawings, which are incorporated herein and form part of the specification, illustrate embodiments of the present invention and, together with the description, further serve to explain the principles involved and to enable a person skilled in the relevant art(s) to make and use the disclosed technologies.
FIG. 1 is a block diagram of an example ratio-based maliciousness identification system in accordance with an embodiment.
FIGS. 2-5 depict flowcharts of example methods for identifying a potentially malicious entity based on a conversation acceptance ratio in accordance with embodiments.
FIG. 6 depicts a flowchart of an example method for identifying a potentially malicious entity based on a conversation denial ratio in accordance with an embodiment.
FIG. 7 depicts a flowchart of an example method for identifying a potentially malicious entity based on a conversation acceptance-denial ratio in accordance with an embodiment.
FIG. 8 is a block diagram of an example computing system in accordance with an embodiment.
FIG. 9 depicts an example computer in which embodiments may be implemented.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Example Embodiments

A communication platform enables conversations between entities (e.g., users). Malicious entities sometimes conduct cyberattacks, such as phishing attacks, by exploiting vulnerabilities in a communication platform. The vulnerabilities may arise due to any of a variety of factors. For example, a user of the communication platform may not suspect a message that is received via the communication platform to be malicious. In another example, the communication platform may not enable reporting of a message that is received from outside an organization as being malicious, or a mechanism in the communication platform that is used for such purpose may not be effective. In yet another example, a user of the communication platform may delay approval of a message that is received via the communication platform until the user is convinced that the message is legitimate. For instance, the message may be approved only after the user receives additional messages from the malicious entity. In still another example, the malicious entity may use an identity that mimics a legitimate entity (e.g., a legitimate support service) to avoid detection. These factors may lead to significant security breaches, including unauthorized access to sensitive information and corporate data theft. Conventional techniques for detecting malicious activity in context of a communication platform may miss such subtle cues, especially when activity of the malicious entity is dispersed across multiple organizations.

A communication platform logs actions that are performed by users of the communication platform by creating events that memorialize the actions. For instance, when users of the communication platform engage in a conversation, the communication platform generates events that indicate actions performed by the users during the conversation. The events that are created by the communication platform are stored in system-generated event logs. By analyzing events associated with a particular entity in the system-generated event logs, a determination may be made whether the entity is potentially malicious. In an aspect, the events provide insight regarding how attempts by the entity to engage with users are perceived or handled by the users. The determination regarding maliciousness of the entity may be made with high confidence because the system-generated event logs are not easily modified by a malicious entity. In an aspect, by utilizing the system-generate event logs to determine maliciousness of the entity, the likelihood of a security breach is reduced, as compared to the conventional techniques.

One type of a communication platform is a social enterprise messaging tool. A social enterprise messaging tool is a communication platform that enables secure, real-time collaboration and information sharing within and across organizations. A malicious entity may perform a phishing attack on the social enterprise messaging tool by sending conversation requests to users of the social enterprise messaging tool. In a real-world example, the malicious entity sends chat message(s), initiates video call(s), and/or initiates audio call(s) to users of a Microsoft Teams^{®} application, which is developed and distributed by Microsoft Corporation. A proportion of the conversation requests that are accepted by users, a proportion of the conversation requests that are denied by users, and/or a comparison of the number of acceptances and the number of denials may be used to identify the malicious entity as being potentially malicious. In accordance with the real-world example mentioned above, a user may accept a chat message from the malicious entity by sending a return chat message in response to the chat message from the malicious entity. In accordance with the real-world example, a user may accept a video or audio call from the malicious entity by answering the video or audio call (e.g., by selecting an "accept" button). In an example, a proportion of the conversation requests that are accepted being less than a reference proportion weighs in favor of the malicious entity being identified as malicious. In another example, a proportion of the conversation requests that are denied being greater than a reference proportion weighs in favor of the malicious entity being identified as malicious. In yet another example, a value, which is determined using the number of the conversation requests that are accepted and the number of the conversation requests that are denied, being less than a reference value weighs in favor of the malicious entity being identified as malicious. Other factors may be taken into consideration, as well. For instance, a user delaying acceptance of a conversation request (e.g., by more than a specified amount of time) may weigh in favor of the malicious entity being identified as malicious. The social enterprise messaging tool logs the conversation requests, the acceptances, and the denials in corresponding events in system-generated event log(s).

Accordingly, it may be desirable to determine whether an entity that utilizes a communication platform is potentially malicious by analyzing system-generated event logs that include events associated with the entity. A system-generated event log is an event log that is generated by a computing system or by code (e.g., software) running on the computing system. Accordingly, the system-generated event log is not generated by a human. Although actions of a human may trigger a computing system to generate events in a system-generated event log, the human generates neither the event log nor the events therein. An event log is a log (e.g., a record or a description) of events.

An event is a message that indicates occurrence of an action (e.g., an asynchronous action or a synchronous action). Examples of an action include but are not limited to initiation of a conversation, acceptance of a conversation, denial of a conversation, a keystroke, a mouse movement, a mouse click, a touchscreen event (e.g., a gesture), window resizing, receipt of a message from a program, a timer expiring, and an operation (e.g., access) performed with regard to a registry, a file, a network, or a process. For instance, the event may be application-level information from an underlying framework (e.g., a graphical user interface (GUI) toolkit). The event may include information that indicates a type of the event, a time instance at which the event was generated, who or what triggered generation of the event, and/or a manner in which the event is to be processed. It will be recognized that events may be used at an instruction set level to complement interrupts. Events often are implemented synchronously, whereas interrupts are implemented asynchronously. For instance, even if events are received asynchronously, the events may be handled synchronously with program flow. Example types of an event include but are not limited to a conversation initiation event, a user acceptance event, and a user denial event. A conversation initiation event is an event that indicates initiation of a conversation. In an aspect, the conversation initiation event indicates that an entity requests (e.g., solicits) the conversation with one or more users. A user acceptance event is an event that indicates acceptance of a conversation. A user denial event is an event that indicates denial of a conversation.

An entity is anything that triggers an event. Examples of an entity include but are not limited to a computing device, a user (e.g., a user regardless of application(s) with which the event is associated or a user with regard to a particular application), a group of users, a logging system, a Windows^{®} secure kernel, an Internet Protocol (IP) address, a process (e.g., an application), a virtual machine, and an autonomous agent.

In an aspect, the system-generated event logs are not capable of being easily manipulated by a malicious entity. For instance, the system-generated event logs may be immutable, meaning that the system-generated event logs are not capable of or susceptible to change (e.g., by the malicious entity). A malicious entity is an entity that intentionally causes (or tries to cause or is configured to cause) harm to a system and/or a user of the system. In an example, the system is a computing system (e.g., a personal computer, a server, or an Internet of things (IoT) device), a network, a router, a switch, or a firewall. In another example, the harm is an unauthorized or illegal access to the system. In yet another example, the harm results from the malicious entity initiating, enabling, or participating in a cyberattack. A cyberattack is an attempt to cause harm to a system and/or a user of the system. One example of a cyberattack is a phishing attack. A phishing attack is a cyberattack in which a deceptive communication (e.g., an electronic mail (i.e., email) message or an instant message) is provided to a user to trick the user into revealing sensitive information or downloading malware.

Example embodiments described herein are capable of identifying a potentially malicious entity based on (e.g., based at least on) conversation acceptance and/or denial ratio(s). A conversation acceptance ratio (i.e., an acceptance ratio) indicates a proportion of conversations initiated by an entity that are accepted. A threshold acceptance ratio is an acceptance ratio at or below which an entity is deemed to be a potentially malicious entity. A conversation denial ratio (i.e., a denial ratio) indicates a proportion of conversations initiated by an entity that are denied. A threshold denial ratio is a denial ratio at or above which an entity is deemed to be a potentially malicious entity. A conversation acceptance-denial ratio (i.e., an acceptance-denial ratio) indicates a comparison of a number of conversations initiated by an entity that are accepted and a number of the conversations that are denied. In an aspect, the acceptance-denial ratio indicates a comparison of an acceptance ratio and a denial ratio. A threshold acceptance-denial ratio is an acceptance-denial ratio at or below which an entity is deemed to be a potentially malicious entity. A potentially malicious entity is an entity that is potentially a malicious entity. In an aspect, the entity is deemed to be a potentially malicious entity as a result of a likelihood that the entity is a malicious entity being greater than or equal to a likelihood threshold. In an example of this aspect, a proportion of conversation requests from an entity that are accepted being less than or equal to an acceptance threshold, a proportion of the conversation requests that are denied being greater than or equal to a denial threshold, and/or the number of the conversations that are accepted divided by the number of the conversations that are denied being less than or equal to an acceptance-denial threshold indicates that the entity is the potentially malicious entity.

Example techniques described herein have a variety of benefits as compared to conventional techniques for identifying a potentially malicious entity. For instance, the example techniques are capable of increasing security of a computing system that utilizes a communication platform and/or a user of the computing system. In an aspect, the example techniques increase the security by identifying a potentially malicious entity more accurately, precisely, and/or reliably than conventional techniques. By increasing accuracy, precision, and/or reliability (e.g., statistical accuracy, statistical precision, and/or statistical reliability) with which the potentially malicious entity is identified, the example techniques reduce a likelihood of missing (e.g., overlooking) a potential malicious entity indicated by log events. In another aspect, the example techniques increase the security by identifying the potentially malicious entity more quickly and/or efficiently than the conventional techniques.

In an example of a first aspect, by determining a first number of conversation initiation events in a plurality of system-generated event logs, the conversation initiation events resulting from a particular entity initiating conversations; determining a second number of user acceptance events in the plurality of system-generated event logs, the user acceptance events resulting from acceptance of identified conversations, which are comprised in the conversations initiated by the particular entity; determining an acceptance ratio, which indicates a proportion of the conversations that are accepted, using the first number of the conversation initiation events and the second number of the user acceptance events; as a result of the acceptance ratio being less than or equal to a threshold acceptance ratio, identifying the particular entity as a potentially malicious entity; and/or as a result of identifying the particular entity as the potentially malicious entity, performing a security action with regard to the potentially malicious entity, the security of computing systems that receive requests for the conversations, users of the computing systems, and resources that are accessible using the computing systems is increased. For instance, the security may be increased by increasing the statistical accuracy, precision, reliability, speed, and/or efficiency with which the particular entity is identified as the potentially malicious entity.

In an example of a second aspect, by determining a first number of conversation initiation events in a plurality of system-generated event logs, the conversation initiation events resulting from a particular entity initiating conversations; determining a second number of user denial events in the plurality of system-generated event logs, the user denial events resulting from denial of designated conversations, which are comprised in the conversations initiated by the particular entity; determining a denial ratio, which indicates a proportion of the conversations that are denied, using the first number of the conversation initiation events and the second number of the user denial events; as a result of the denial ratio being greater than or equal to a threshold denial ratio, identifying the particular entity as a potentially malicious entity; and/or as a result of identifying the particular entity as the potentially malicious entity, performing a security action with regard to the potentially malicious entity, the security of computing systems that receive requests for the conversations, users of the computing systems, and resources that are accessible using the computing systems is increased (e.g., by increasing the statistical accuracy, precision, reliability, speed, and/or efficiency with which the particular entity is identified as the potentially malicious entity).

In an example of a third aspect, by determining a first number of user acceptance events in a plurality of system-generated event logs, the user acceptance events resulting from acceptance of first conversations in a plurality of conversations initiated by a particular entity; determining a second number of user denial events in the plurality of system-generated event logs, the user denial events resulting from denial of second conversations in the plurality of conversations initiated by the particular entity; determining an acceptance-denial ratio, which indicates a comparison of a first determined number of the conversations that are accepted and a second determined number of the conversations that are denied, using the first number of the user acceptance events and the second number of the user denial events; as a result of the acceptance-denial ratio being less than or equal to a threshold acceptance-denial ratio, identifying the particular entity as a potentially malicious entity; and/or as a result of identifying the particular entity as the potentially malicious entity, performing a security action with regard to the potentially malicious entity, the security of computing systems that receive requests for the conversations, users of the computing systems, and resources that are accessible using the computing systems is increased (e.g., by increasing the statistical accuracy, precision, reliability, speed, and/or efficiency with which the particular entity is identified as the potentially malicious entity).

The example techniques are capable of reducing an amount of time and/or resources (e.g., processor cycles, memory, network bandwidth) that is consumed (e.g., by a computing system) to identify a potentially malicious entity and/or to perform a security action with regard to the potentially malicious entity. In an example, by reducing the amount of time and/or resources that is consumed by a computing system to identify a potentially malicious entity and/or to perform a security action with regard to the potentially malicious entity, efficiency of the computing system is increased.

The example techniques are capable of automating at least some (e.g., all) aspects of identifying a potentially malicious entity based on conversation acceptance and/or denial ratio(s). In an example implementation, the example techniques automate any one or more (e.g., all) of the operations described above with regard to the first, second, and third aspects. By automating one or more of the operations described above with regard to the first, second, and third aspects, the example techniques reduce a number of the operations that are manually performed by an IT professional, which enables the IT professional to focus on other tasks.

By increasing security of a system (e.g., an enterprise) that is targeted by the particular entity, computing systems therein, and users of the computing systems, the example techniques are capable of increasing a user experience and/or efficiency of an IT professional who manages security of the system. The example techniques are capable of increasing a user experience and/or efficiency of end user(s) who are targeted by the particular entity, for example, by increasing security of the end user(s) and/or system(s) that are accessible to the end user(s). In an example, the user experience of the IT professional and/or the end user(s) is increased in other ways, as well. In accordance with this example, the user experience and/or the efficiency is increased through a more accurate, precise, reliable, speedy, and/or efficient identification of the potentially malicious entity and/or performance of the security action with regard to the potentially malicious entity.

In an aspect, the example techniques are communication platform agnostic. In accordance with this aspect, the example techniques are applicable to any suitable communication platform. In another aspect, the example techniques are more scalable than the conventional techniques for identifying a potentially malicious entity.

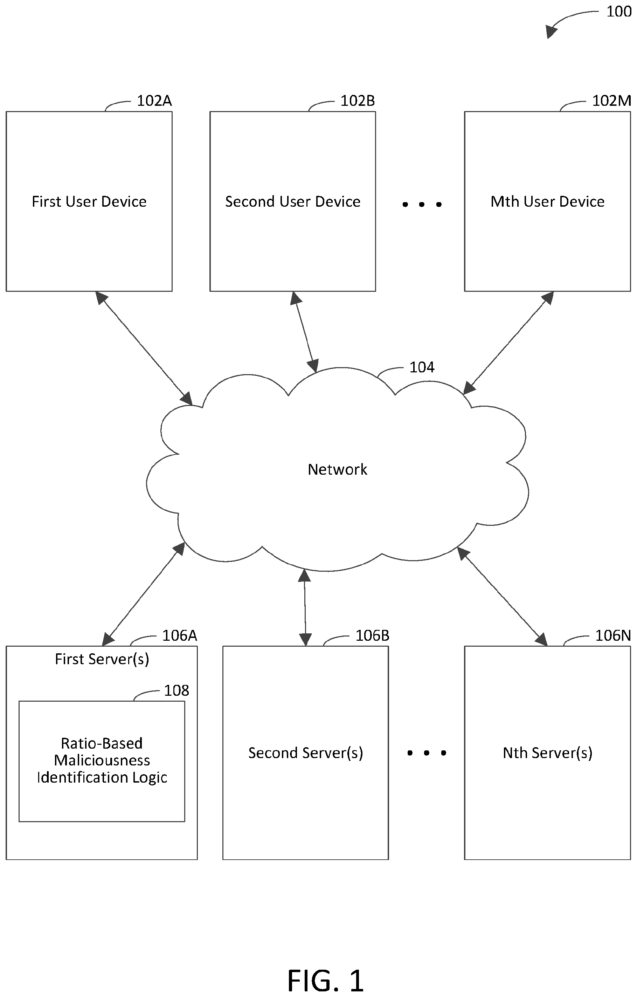

FIG. 1 is a block diagram of an example ratio-based maliciousness identification system 100 in accordance with an embodiment. Generally speaking, the ratio-based maliciousness identification system 100 operates to provide information to users in response to requests (e.g., hypertext transfer protocol (HTTP) requests) that are received from the users. In an aspect, the information includes documents (Web pages, images, audio files, video files, etc.), output of executables, and/or any other suitable type of information. In accordance with example embodiments described herein, the ratio-based maliciousness identification system 100 identify a potentially malicious entity based on conversation acceptance and/or denial ratio(s). Detail regarding techniques for identifying a potentially malicious entity based on conversation acceptance and/or denial ratio(s) is provided in the following discussion.

As shown in FIG. 1, the ratio-based maliciousness identification system 100 includes a plurality of user devices 102A-102M, a network 104, and a plurality of servers 106A-106N. Communication among the user devices 102A-102M and the servers 106A-106N is carried out over the network 104 using well-known network communication protocols. In an aspect, the network 104 is a wide-area network (e.g., the Internet), a local area network (LAN), another type of network, or a combination thereof.

The user devices 102A-102M are computing systems that are capable of communicating with servers 106A-106N. A computing system is a system that includes at least a portion of a processor system such that the portion of the processor system includes at least one processor that is capable of manipulating data in accordance with a set of instructions. A processor system includes one or more processors. In an example, the one or more processors are on a same (e.g., single) device. In another example, the one or more processors are distributed among multiple (e.g., separate) devices. For instance, a computing system may be a computer, a personal digital assistant, etc. The user devices 102A-102M are configured to provide requests to the servers 106A-106N for requesting information stored on (or otherwise accessible via) the servers 106A-106N. In an example, a user initiates a request for executing a computer program (e.g., an application) using a client (e.g., a Web browser, Web crawler, or other type of client) deployed on a user device 102 that is owned by or otherwise accessible to the user. In accordance with some example embodiments, the user devices 102A-102M are capable of accessing domains (e.g., Web sites) hosted by the servers 104A-104N, so that the user devices 102A-102M are able to access information that is available via the domains. In an aspect, the domain include Web page(s). In an example the Web page(s) are provided as hypertext markup language (HTML) documents and objects (e.g., files) that are linked therein.

Each of the user devices 102A-102M may include any client-enabled system or device, including but not limited to a desktop computer, a laptop computer, a tablet computer, a wearable computer such as a smart watch or a head-mounted computer, a personal digital assistant, a cellular telephone, an Internet of things (IoT) device, or the like. It will be recognized that any one or more of the user devices 102A-102M may communicate with any one or more of the servers 106A-106N.

The servers 106A-106N are computing systems that are capable of communicating with the user devices 102A-102M. The servers 106A-106N are configured to execute computer programs that provide information to users in response to receiving requests from the users. In an example, the information includes documents (Web pages, images, audio files, video files, etc.), output of executables, or any other suitable type of information. In accordance with some example embodiments, the servers 106A-106N are configured to host respective Web sites, so that the Web sites are accessible to users of the ratio-based maliciousness identification system 100.

One example type of computer program that may be executed by one or more of the servers 106A-106N is a computer security program. A computer security program is a computer program that provides security with regard to information and/or communications associated with a computing system. In an example, the information associated with the computing system includes information stored on the computing system and/or information accessed (e.g., read) by the computing system. In another example, the communications associated with the computing system includes communications received by the computing system and/or communications provided (e.g., transmitted) by the computing system. An example of a communication is an electronic message. Examples of a computer security program include Bitdefender^{®} security program, developed and distributed by Bitdefender IPR Management Ltd.; Norton^{®} security program, developed and distributed by Gen Digital Inc.; Avast^{®} security program, developed and distributed by Avast Software S.R.O.; McAfee^{®} security program, developed and distributed by McAfee, LLC; and Microsoft Defender^{®} security program, developed and distributed by Microsoft Corporation. In an example implementation, one or more of the example techniques described herein are implemented using a computer security program. In an example, a software product (e.g., a subscription service, a non-subscription service, or a combination thereof) includes the computer security program, and the software product is configured to perform the example techniques.

In an aspect, the computer security program is a cloud native application protection platform (CNAPP). A CNAPP is an all-in-one platform that unifies security and compliance capabilities to prevent, detect, and respond to cloud security threats. A CNAPP integrates multiple cloud security solutions, which traditionally have been siloed, into a common (e.g., single) user interface. In an example, the cloud security solutions include cloud security posture management (CSPM), multipipeline development and operations (DevOps) security, a cloud workload protection platform (CWPP), cloud infrastructure entitlement management (CIEM), and/or cloud service network security (CSNS). CSPM provides a connected, prioritized view of potential vulnerabilities and misconfigurations across multi-cloud and hybrid environments. The CSPM continuously assesses overall security posture of a system and provides automated alerts and recommendations about critical issues that could expose the system to data breaches. In an example, the CSPM includes automated compliance management and remediation tools to identify and remedy compliance deficiencies. Multipipeline DevOps security provides a central console that enables management of DevOps security across multiple (e.g., all) pipelines. In an example, the multipipeline DevOps security is used to reduce cloud misconfigurations and to scan new code to keep vulnerabilities therein from reaching a production environment. In another example, the multipipeline DevOps security includes infrastructure-as-code scanning tools that analyze configuration files from the earliest stages of development to confirm that new configuration files are compliant with security policies. A CWPP provides real-time detection and response to threats based on up-to-date information regarding multi-cloud workloads (e.g., virtual machines, containers, Kubernetes, databases, storage accounts, network layers, and app services). In an example, the CWPP enables a quick investigation into threats and reduce the attack surface of a system. CIEM centralizes permissions management across a cloud and hybrid footprint, which inhibits (e.g., prevents) accidental or malicious misuse of permissions. CSNS complements the CWPP by protecting cloud infrastructure in real time. In an example, the CSNS includes one or more security tools. Examples of a security tool include but are not limited to distributed denial-of-service protection, a web application firewall, transport layer security examination, and load balancing.

In an aspect, a computer security program is incorporated into a cloud computing program (e.g., a cloud service). A cloud computing program is a computer program that provides hosted service(s) via a network (e.g., network 104). In an example, the hosted service(s) are hosted by any one or more of the servers 106A-106N. In another example, the cloud computing program enables users (e.g., at any of the user systems 102A-102M) to access shared resources that are stored on or are otherwise accessible to the server(s) via the network.

In an example of this aspect, the cloud computing program provides hosted service(s) according to a service model. Examples of a service model include but are not limited to Backend as a Service (BaaS), Software as a Service (SaaS), Platform as a Service (PaaS), and Infrastructure as a Service (IaaS). BaaS enables applications (e.g., software programs) to use a BaaS provider's backend services (e.g., push notifications, integration with social networks, and cloud storage) running on a cloud infrastructure. SaaS enables a user to use a SaaS provider's applications running on a cloud infrastructure. PaaS enables a user to develop and run applications using a PaaS provider's application development environment (e.g., operating system, programming-language execution environment, database) on a cloud infrastructure. IaaS enables a user to use an IaaS provider's computer infrastructure (e.g., to support an enterprise). In an example, IaaS provides to the user virtualized computing resources that utilize the IaaS provider's physical computer resources.

Examples of a cloud computing program include but are not limited to a Google Cloud^{®} program developed and distributed by Google Inc.; an Oracle Cloud^{®} program developed and distributed by Oracle Corporation; an Amazon Web Services^{®} program developed and distributed by Amazon.com, Inc.; a Salesforce^{®} program developed and distributed by Salesforce.com, Inc.; an AppSource^{®} program developed and distributed by Microsoft Corporation; an Azure^{®} program developed and distributed by Microsoft Corporation; a GoDaddy^{®} program developed and distributed by GoDaddy.com LLC; and a Rackspace^{®} program developed and distributed by Rackspace US, Inc. In an aspect, one or more of the example techniques described herein are implemented using a cloud computing program. In an example, a software product (e.g., a subscription service, a non-subscription service, or a combination thereof) includes the cloud computing program, and the software product is configured to perform the example techniques.

The first server(s) 106A are shown to include ratio-based maliciousness identification logic 108 for illustrative purposes. The ratio-based maliciousness identification logic 108 is configured to identify a potentially malicious entity based on (e.g., based at least on) conversation acceptance and/or denial ratio(s). In a first example implementation, the ratio-based maliciousness identification logic 108 determines a first number of conversation initiation events in a plurality of system-generated event logs. The conversation initiation events result from a particular entity initiating conversations. The ratio-based maliciousness identification logic 108 determines a second number of user acceptance events in the plurality of system-generated event logs. The user acceptance events result from acceptance of identified conversations, which are comprised in the conversations initiated by the particular entity. The ratio-based maliciousness identification logic 108 determines an acceptance ratio using the first number of the conversation initiation events and the second number of the user acceptance events. The acceptance ratio indicates a proportion of the conversations that are accepted. As a result of the acceptance ratio being less than or equal to a threshold acceptance ratio, the ratio-based maliciousness identification logic 108 identifies the particular entity as a potentially malicious entity. As a result of the particular entity being identified as the potentially malicious entity, the ratio-based maliciousness identification logic 108 performs a security action with regard to the potentially malicious entity.

In a second example implementation, the ratio-based maliciousness identification logic 108 determines a first number of conversation initiation events in a plurality of system-generated event logs. The conversation initiation events result from a particular entity initiating conversations. The ratio-based maliciousness identification logic 108 determines a second number of user denial events in the plurality of system-generated event logs. The user denial events result from denial of designated conversations, which are comprised in the conversations initiated by the particular entity. The ratio-based maliciousness identification logic 108 determines a denial ratio using the first number of the conversation initiation events and the second number of the user denial events. The denial ratio indicates a proportion of the conversations that are denied. As a result of the denial ratio being greater than or equal to a threshold denial ratio, the ratio-based maliciousness identification logic 108 identifies the particular entity as a potentially malicious entity. As a result of the particular entity being identified as the potentially malicious entity, the ratio-based maliciousness identification logic 108 performs a security action with regard to the potentially malicious entity.

In a third example implementation, the ratio-based maliciousness identification logic 108 determines a first number of user acceptance events in a plurality of system-generated event logs. The user acceptance events result from acceptance of first conversations in a plurality of conversations initiated by a particular entity. The ratio-based maliciousness identification logic 108 determines a second number of user denial events in the plurality of system-generated event logs. The user denial events result from denial of second conversations in the plurality of conversations initiated by the particular entity. The ratio-based maliciousness identification logic 108 determines an acceptance-denial ratio using the first number of the user acceptance events and the second number of the user denial events. The acceptance-denial ratio indicates a comparison of a first determined number of the conversations that are accepted and a second determined number of the conversations that are denied. As a result of the acceptance-denial ratio being less than or equal to a threshold acceptance-denial ratio, the ratio-based maliciousness identification logic 108 identifies the particular entity as a potentially malicious entity. As a result of the particular entity being identified as the potentially malicious entity, the ratio-based maliciousness identification logic 108 performs a security action with regard to the potentially malicious entity.

The ratio-based maliciousness identification logic 108 may be implemented in various ways to identify a potentially malicious entity based on (e.g., based at least on) conversation acceptance and/or denial ratio(s), including being implemented in hardware, software, firmware, or any combination thereof. In an aspect, the ratio-based maliciousness identification logic 108 is implemented as computer program code configured to be executed in one or more processors. In another aspect, at least a portion of the ratio-based maliciousness identification logic 108 is implemented as hardware logic/electrical circuitry. In an example of this aspect, at least a portion of the ratio-based maliciousness identification logic 108 is implemented in a field-programmable gate array (FPGA), an application-specific integrated circuit (ASIC), an application-specific standard product (ASSP), a system-on-a-chip system (SoC), and/or a complex programmable logic device (CPLD). In an example, each SoC includes an integrated circuit chip that includes one or more of a processor (a microcontroller, microprocessor, digital signal processor (DSP), etc.), memory, one or more communication interfaces, and/or further circuits and/or embedded firmware to perform its functions.

In an aspect, the ratio-based maliciousness identification logic 108 is (or is included in) a computer security program and/or a cloud computing program. In another aspect, the ratio-based maliciousness identification logic 108 is (or is included in) a communication platform. In yet another aspect, the ratio-based maliciousness identification logic 108 is implemented in a particular organization (e.g., enterprise). In an example of this aspect, the ratio-based maliciousness identification logic 108 is configured to be organization-specific. In accordance with this example, the conversation initiation events, the user acceptance events, and the user denial events are specific to the organization.

The ratio-based maliciousness identification logic 108 is shown to be incorporated in the first server(s) 106A for illustrative purposes and is not intended to be limiting. It will be recognized that the ratio-based maliciousness identification logic 108 (or any portion(s) thereof) may be incorporated in any one or more of the servers 106A-106N, any one or more of the user devices 102A-102M, or any combination thereof. In an example, client-side aspects of the ratio-based maliciousness identification logic 108 are incorporated in one or more of the user devices 102A-102M, and server-side aspects of ratio-based maliciousness identification logic 108 are incorporated in one or more of the servers 106A-106N.

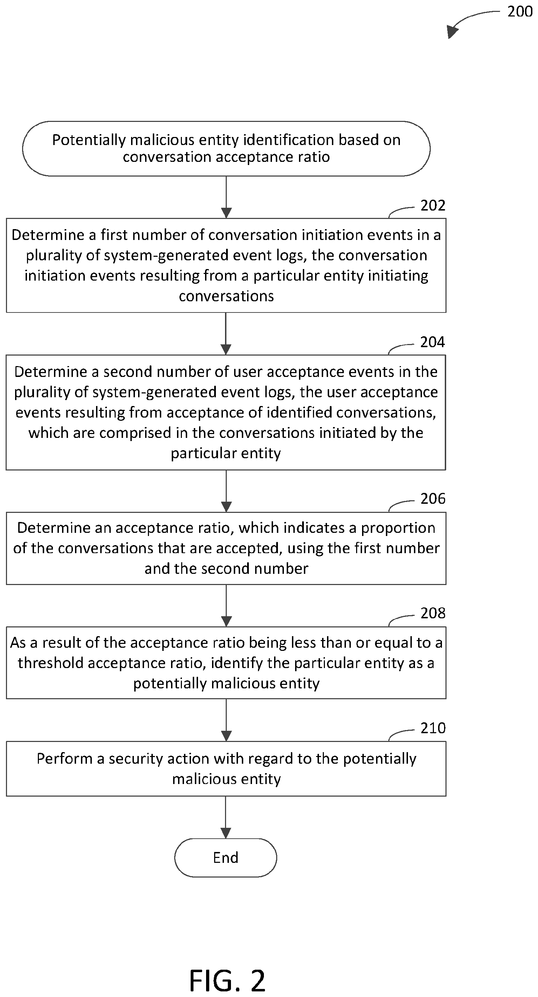

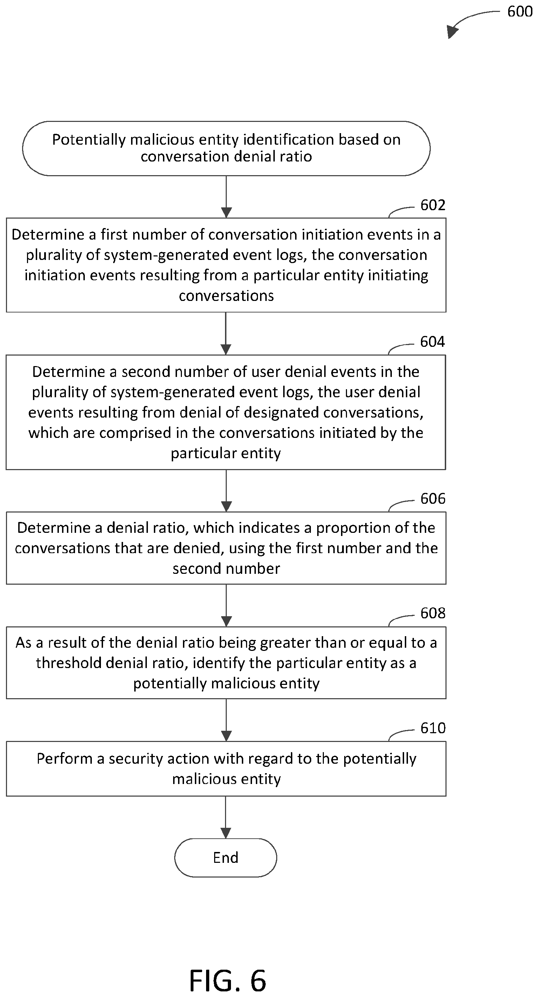

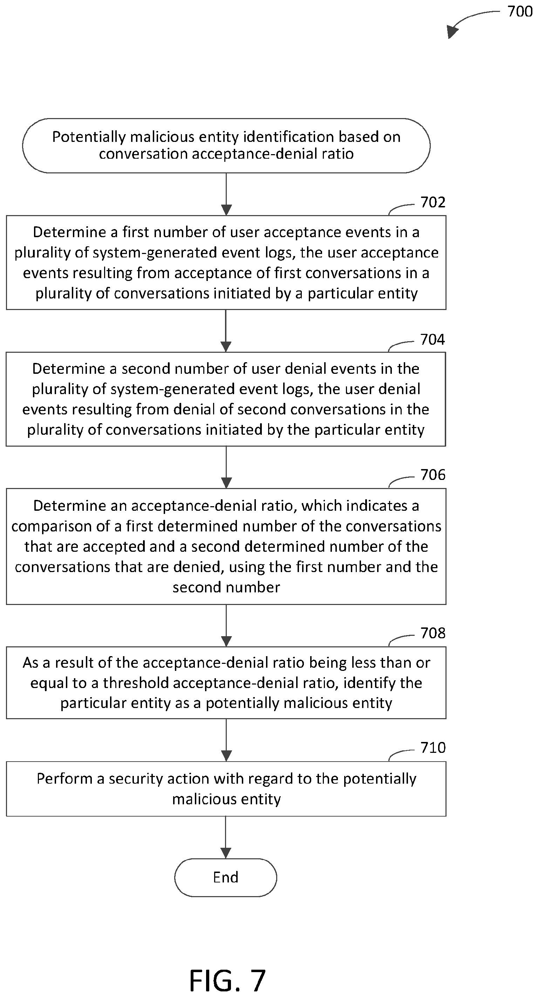

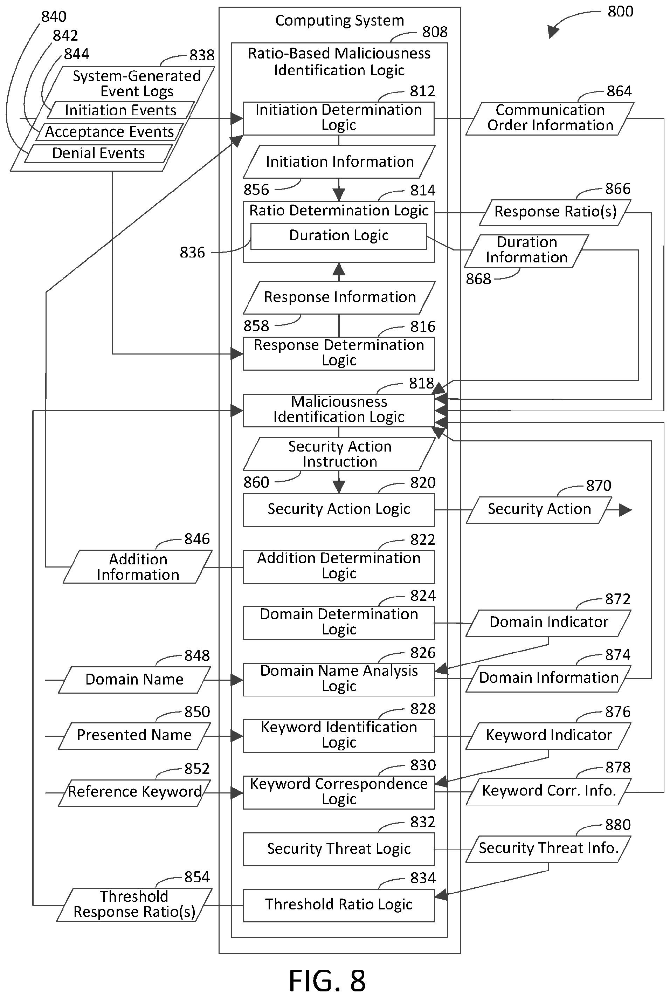

FIGS. 2-5 depict flowcharts 200, 300, 400, and 500 of example methods for identifying a potentially malicious entity based on a conversation acceptance ratio in accordance with embodiments. FIG. 6 depicts a flowchart 600 of an example method for identifying a potentially malicious entity based on a conversation denial ratio in accordance with an embodiment. FIG. 7 depicts a flowchart 700 of an example method for identifying a potentially malicious entity based on a conversation acceptance-denial ratio in accordance with an embodiment. In an aspect, flowcharts 200, 300, 400, 500, 600, and 700 are performed by the first server(s) 106A shown in FIG. 1, for example. For illustrative purposes, flowcharts 200, 300, 400, 500, 600, and 700 are described with respect to a computing system 800 shown in FIG. 8, which is an example implementation of the first server(s) 106A. As shown in FIG. 8, the computing system 800 includes ratio-based maliciousness identification logic 808. The ratio-based maliciousness identification logic 808 includes initiation determination logic 812, ratio determination logic 814, response determination logic 816, maliciousness identification logic 818, security action logic 820, addition determination logic 822, domain determination logic 824, domain name analysis logic 826, keyword identification logic 828, keyword correspondence logic 830, security threat logic 832, and threshold ratio logic 834. The ratio determination logic 814 includes duration logic 836. Further structural and operational embodiments will be apparent to persons skilled in the relevant art(s) based on the discussion regarding flowcharts 200, 300, 400, 500, 600, and 700.

As shown in FIG. 2, the method of flowchart 200 begins at step 202. In step 202, a first number of conversation initiation events in a plurality of system-generated event logs is determined. In an aspect, the plurality of system-generated event logs are a plurality of immutable system-generated event logs. In another aspect, the conversation initiation events comprise an identifier that identifies the particular entity. The identifier may comprise (e.g., be) a name of the particular entity or a communication platform user identifier of the particular entity. Examples of a communication platform user identifier include but are not limited to an email address, a social media user identifier, and a telephone number. In an example of this aspect, the identifier is a unique identifier that uniquely identifies the particular entity. In another example of this aspect, the conversation initiation events indicate that the particular entity is the initiator of the respective conversations. The conversation initiation events result from a particular entity initiating (e.g., requesting) conversations. Each of the conversations may be initiated by the particular user via a chat, an instant message, an electronic mail (email) message, a phone call, or a video call. In an aspect, at least one (e.g., all) of the conversations is initiated by the particular entity with multiple other entities (e.g., users). For example a first conversation may be initiated by the particular entity with first users; a second conversation may be initiated by the particular entity with second users, and so on. In an aspect, the conversations are one-on-one conversations initiated by the particular entity with respective individual users. In an example implementation, the initiation determination logic 812 determines a first number of initiation events 844 in a plurality of system-generated event logs 838. The initiation events 844 result from the particular entity initiating conversations. The initiation determination logic 812 generates initiation information 856 to indicate (e.g., specify) the first number of the initiation events 844.

In an example embodiment, the plurality of system-generated event logs are associated with a messaging application (e.g., an email application, an instant messaging application, or a social media application). Examples of a messaging application include but are not limited to a Microsoft Teams^{®} application, developed and distributed by Microsoft Corporation; a Slack^{®} application, developed and distributed by Salesforce, Inc.; Facebook^{®}, Messenger^{®}, and WhatsApp^{®} applications, developed and distributed by Meta Platforms, Inc.; a Telegram^{®} application, developed and distributed by Telegram messenger LLP; a WeChat^{®} application, developed and distributed by Tencent Holdings Limited; a Signal^{®} application, developed and distributed by Signal Technology Foundation; and a Snapchat^{®} application, developed and distributed by Snap Inc.

At step 204, a second number of user acceptance events in the plurality of system-generated event logs is determined. The user acceptance events result from acceptance of identified conversations, which are comprised in the conversations initiated by the particular entity. Each of the identified conversations may be accepted by a user via a chat, an instant message, an email message, a phone call, or a video call. In an aspect, each of the acceptance events comprises an identifier that identifies a user who accepts the corresponding identified conversation. In an example implementation, the response determination logic 816 determines a second number of acceptance events 842 in the plurality of system-generated event logs 838. The acceptance events 842 result from the acceptance of the identified conversations, which are comprised in the conversations initiated by the particular entity. The response determination logic 816 generates response information 858 to indicate (e.g., specify) the second number of the acceptance events 842.

In an example embodiment, the conversation initiation events result from the particular entity, which is external to a designated organization, initiating the conversations with users that are included in the designated organization. In accordance with this embodiment, the user acceptance events result from acceptance of the identified conversations by the users that are included in the designated organization.

In another example embodiment, the conversation initiation events result from the particular entity, which is external to a designated tenant of a message-enabled service, initiating the conversations with users that are included in the designated tenant. In accordance with this embodiment, the user acceptance events result from acceptance of the identified conversations by the users that are included in the designated tenant.

At step 206, an acceptance ratio is determined using the first number of the conversation initiation events and the second number of the user acceptance events. The acceptance ratio indicates a proportion of the conversations that are accepted. In an aspect, the acceptance ratio is calculated by dividing the second number by the first number. In an example of this aspect, the acceptance ratio is equal to the second number divided by the first number. In an example implementation, the ratio determination logic 814 determines the acceptance ratio using the first number, as indicated by the initiation information 856, and the second number, as indicated by the response information 858. The ratio determination logic 814 generates response ratio(s) 866, which comprise the acceptance ratio.

At step 208, as a result of the acceptance ratio being less than or equal to a threshold acceptance ratio, the particular entity is identified as a potentially malicious entity. In an aspect, the threshold acceptance ratio is 0.2, 0.3, 0.4, or 0.5. In an example implementation, as a result of the acceptance ratio being less than or equal to a threshold acceptance ratio, the maliciousness identification logic 818 identifies the particular entity as the potentially malicious entity. In an aspect, the maliciousness identification logic 818 analyzes the response ratio(s) 866 to determine the acceptance ratio. In accordance with this aspect, the maliciousness identification logic 818 analyzes threshold response ratio(s) 854 to determine the threshold acceptance ratio. In further accordance with this aspect, the maliciousness identification logic 818 determines that the acceptance ratio is less than or equal to the threshold acceptance ratio by comparing the acceptance ratio, as indicated by the response ratio(s) 866, and the threshold acceptance ratio, as indicated by the threshold response ratio(s) 854. The maliciousness identification logic 818 generates a security action instruction 860 as a result of identifying the particular entity as the potentially malicious entity. The security action instruction 860 indicates that a security action 870 is to be performed. In an example, the security action instruction 860 instructs the security action logic 820 to perform the security action 870.

In an example embodiment, the particular entity is identified as the potentially malicious entity at step 208 as a result of the acceptance ratio being less than or equal to the threshold acceptance ratio and the first number being greater than or equal to a threshold number. In an aspect, threshold number is 2, 3, 4, 6, or 10.

At step 210, as a result of identifying the particular entity as the potentially malicious entity, a security action is performed with regard to the potentially malicious entity. In an aspect, the security action is a remedial action or a preventative action. A remedial action is an action performed in response to harm that is caused to a system and/or a user of the system. A preventative action is an action performed to inhibit (e.g., prevent) a harm from being caused to a system and/or a user of the system. Examples of a security action include but are not limited to notifying an administrative user (and/or users with whom the particular entity initiates the conversations) that the particular entity is potentially malicious, blocking (e.g., preventing) the particular entity and/or a tenant to which the particular entity belongs from further communication with the users (e.g., anyone in an organization that includes the users), and blocking the particular entity from accessing an application that was used to initiate the conversations. In an example implementation, as a result of the particular entity being identified as the potentially malicious entity, the security action logic 860 performs the security action 870 with regard to the potentially malicious entity. In an aspect, the security action logic 860 performs the security action 870 with regard to the potentially malicious entity in response to receipt of the security action instruction 860 (e.g., in response to the security action instruction 860 indicating that the security action 870 is to be performed).

In an example implementation, one or more steps 202, 204, 206, 208, and/or 210 of flowchart 200 are not performed. In another example implementation, step(s) in addition to or in lieu of steps 202, 204, 206, 208, and/or 210 are performed. For instance, in an example enterprise embodiment, the method of flowchart 200 further comprises determining that the particular entity is added to an enterprise at a time instance. In an example implementation, the addition determination logic 822 determines that the particular entity is added to the enterprise at the time instance. The addition determination logic 822 generates addition information 846, which indicates that the particular entity is added to the enterprise at the time instance. For instance, the addition information 846 may specify the particular entity, the enterprise, and the time instance. In accordance with this embodiment, determining the first number of the conversation initiation events at step 202 comprises determining the first number of the conversation initiation events, which result from the particular entity initiating the conversations with other users in the enterprise within a specified period of time that begins at the time instance. In an example implementation, the initiation determination logic 812 analyzes the addition information 846 to determine the time instance at which the particular entity is added to the enterprise. In accordance with this implementation, the initiation determination logic 812 analyzes the initiation information 856 to determine time instances at which the particular entity initiates the conversations with the other users in the enterprise. In further accordance with this implementation, the initiation determination logic 812 compares the time instance at which the particular entity is added to the enterprise, as indicated by the addition information 846, and the time instances at which the particular entity initiates the conversations with the other users in the enterprise, as indicated by the initiation information 856, to determine corresponding time differences. In further accordance with this implementation, the initiation determination logic 812 compares the corresponding time differences and the specified period of time to determine that the conversations are initiated by the particular entity with the other users in the enterprise within the specified period of time. In further accordance with this implementation, the initiation determination logic 812 determines the first number by counting the conversation initiation events, which result from the particular entity initiating the conversations. In further accordance with this embodiment, the user acceptance events result from acceptance of the identified conversations by at least a subset of the other users in the enterprise.

In an example tenant embodiment, the method of flowchart 200 further comprises determining that the particular entity is added to a tenant of a message-enabled service at a time instance. In an example implementation, the addition determination logic 822 determines that the particular entity is added to the tenant of the message-enabled service at the time instance. The addition determination logic 822 generates addition information 846, which indicates that the particular entity is added to the tenant of the message-enabled service at the time instance. For instance, the addition information 846 may specify the particular entity, the tenant, and the time instance. In accordance with this embodiment, determining the first number of the conversation initiation events at step 202 comprises determining the first number of the conversation initiation events, which result from the particular entity initiating the conversations with other users in the tenant within a specified period of time that begins at the time instance. In an example implementation, the initiation determination logic 812 analyzes the addition information 846 to determine the time instance at which the particular entity is added to the tenant of the message-enabled service. In accordance with this implementation, the initiation determination logic 812 analyzes the initiation information 856 to determine time instances at which the particular entity initiates the conversations with the other users in the tenant. In further accordance with this implementation, the initiation determination logic 812 compares the time instance at which the particular entity is added to the tenant of the message-enabled service, as indicated by the addition information 846, and the time instances at which the particular entity initiates the conversations with the other users in the tenant, as indicated by the initiation information 856, to determine corresponding time differences. In further accordance with this implementation, the initiation determination logic 812 compares the corresponding time differences and the specified period of time to determine that the conversations are initiated by the particular entity with the other users in the tenant within the specified period of time. In further accordance with this implementation, the initiation determination logic 812 determines the first number by counting the conversation initiation events, which result from the particular entity initiating the conversations. In further accordance with this embodiment, the user acceptance events result from acceptance of the identified conversations by at least a subset of the other users in the tenant.

In an example sliding window embodiment, the method of flowchart 200 further comprises selecting the plurality of system-generated event logs as a result of a plurality of respective time stamps, which are associated with the plurality of system-generated event logs, indicating a plurality of respective time instances that are included in a sliding window of time. A sliding window of time is a window of time having a starting time and an ending time that increment with passage of time. In an example, the sliding window of time is a fixed duration of time having an ending time that is continuously or iteratively updated to be a current time. In an accordance with this example, the ending time is equal to the start time plus the fixed duration of time. In an aspect, the fixed duration is 12 hours, 1 day, 2 days, 4 days, or 7 days. In another aspect, the sliding window of time is iteratively updated every 30 minutes, each hour, or every 2 hours. In an example implementation, the initiation determination logic 812 selects the plurality of system-generated event logs 838 as a result of the plurality of respective time stamps, which are associated with the plurality of system-generated event logs 838, indicating the plurality of respective time instances that are included in the sliding window of time.

In an example initiation communication embodiment, the method of flowchart 200 further comprises determining that a specified conversation initiation event, which is included in the conversation initiation events, results from a temporally first communication of the particular entity that is directed to a user in a particular organization. In an example implementation, the initiation determination logic 812 determines that the specified conversation initiation event, which is included in the initiation events 844, results from the temporally first communication of the particular entity that is directed to a user in the particular organization. The initiation determination logic 812 generates communication order information 864, which indicates that the specified conversation initiation event results from the temporally first communication of the particular entity that is directed to a user in the particular organization. For example, the communication order information 864 may indicate an order of communications that are generated by the particular entity, users to whom the communications are directed, and so on. In accordance with this embodiment, the particular entity is identified as the potentially malicious entity at step 208 as a result of the acceptance ratio being less than or equal to the threshold acceptance ratio and the specified conversation initiation event resulting from the temporally first communication of the particular entity that is directed to a user in the particular organization. In an example implementation, the maliciousness identification logic 818 analyzes the communication order information 864 to determine that the specified conversation initiation event results from the temporally first communication of the particular entity that is directed to a user in the particular organization.

In another example initiation communication embodiment, the method of flowchart 200 further comprises determining that a specified conversation initiation event, which is included in the conversation initiation events, results from a temporally first communication of the particular entity that is directed to a user in a particular tenant of a message-enabled service. In an example implementation, the initiation determination logic 812 determines that the specified conversation initiation event, which is included in the initiation events 844, results from the temporally first communication of the particular entity that is directed to a user in the particular tenant of the message-enabled service. The initiation determination logic 812 generates communication order information 864, which indicates that the specified conversation initiation event results from the temporally first communication of the particular entity that is directed to a user in the particular tenant of the message-enabled service. In accordance with this embodiment, the particular entity is identified as the potentially malicious entity at step 208 as a result of the acceptance ratio being less than or equal to the threshold acceptance ratio and the specified conversation initiation event resulting from the temporally first communication of the particular entity that is directed to a user in the particular tenant. In an example implementation, the maliciousness identification logic 818 analyzes the communication order information 864 to determine that the specified conversation initiation event results from the temporally first communication of the particular entity that is directed to a user in the particular tenant of the message-enabled service.

In an example organization embodiment, the conversation initiation events result from the particular entity initiating the conversations with users that are included in a particular organization. In accordance with this embodiment, the user acceptance events result from acceptance of the identified conversations by the users that are included in the particular organization. In further accordance with this embodiment, the method of flowchart 200 further comprises determining that a likelihood of a security threat to the particular organization increases to an increased likelihood (e.g., an increased likelihood that is greater than or equal to a likelihood threshold). For instance, the likelihood threshold may be 30%, 40%, or 50%. In an example implementation, the security threat logic 832 determines that the likelihood of the security threat to the particular organization increases to the increased likelihood. In accordance with this implementation, the security threat logic 832 generates security threat information 880, which indicates that the likelihood of the security threat to the particular organization has increased to the increased likelihood. In further accordance with this embodiment, the method of flowchart 200 further comprises, as a result of the likelihood of the security threat to the particular organization increasing to the increased likelihood, the threshold acceptance ratio is increased. In an example implementation, as a result of the likelihood of the security threat to the particular organization increasing to the increased likelihood, the threshold ratio logic 834 increases the threshold acceptance ratio. The threshold acceptance ratio, which is increased by the threshold ratio logic 834 is included in the threshold response ratio(s) 854. In an aspect, the threshold ratio logic 834 generates (e.g., sets) the threshold response ratio(s) 854. For instance, the threshold ratio logic 834 may maintain or manage the threshold response ratio(s) 854. In another aspect, the threshold ratio logic 834 dynamically adjusts one or more of the threshold response ratio(s) based on any of a variety of factors, such as a likelihood of a security threat, an intensity of a potential security threat, or identification of a known malicious entity interacting with a system or user of the particular organization.

In an example time period embodiment, identified conversation initiation events are associated with respective first time stamps that indicate respective first time instances at which the identified conversations are initiated. The identified conversation initiation events are included in the conversation initiation events. In an example implementation, the initiation information 856 cross-references the identified conversation initiation events, which are included in the initiation events 844, and the respective first time stamps. In accordance with this embodiment, the user acceptance events are associated with respective second time stamps that indicate respective second time instances at which the identified conversations are accepted. In an example implementation, the response information 858 cross-references the user acceptance events and the respective second time stamps. In further accordance with this embodiment, the method of flowchart 200 further comprises determining durations of time periods that begin at the respective first time instances indicated by the respective first time stamps and that end at the respective second time instances indicated by the respective second time stamps. In an example implementation, the duration logic 836 determines the durations of the time periods that begin at the respective first time instances indicated by the respective first time stamps and that end at the respective second time instances indicated by the respective second time stamps. In an aspect, the duration logic 836 analyzes the initiation information 856 to determine that the identified conversation initiation events are cross-referenced with the respective first time stamps. In another aspect, the duration logic 836 analyzes the response information 858 to determine that the user acceptance events are cross-referenced with the respective second time stamps. The duration logic 836 generates duration information 868, which indicates the durations of the time periods. In further accordance with this embodiment, the particular entity is identified as the potentially malicious entity as a result of the acceptance ratio being less than or equal to the threshold acceptance ratio and the durations of the time periods satisfying a time criterion. In an aspect, the time criterion requires that an average of the durations of the time periods is greater than or equal to a duration threshold. In another aspect, the time criterion requires that a median of the durations of the time periods is greater than or equal to a duration threshold. In yet another aspect, the time criterion requires that a number of the durations of the time periods that are greater than or equal to a duration threshold is greater than or equal to a number threshold. In still another aspect, the time criterion requires that a proportion of the durations of the time periods that are greater than or equal to a duration threshold is greater than or equal to a number threshold. In an example implementation, the maliciousness identification logic 818 analyzes the duration information 868 to determine the durations of the time periods. In accordance with this implementation, the maliciousness identification logic 818 determines that the durations of the time periods satisfy the time criterion by comparing the durations of the time periods and the time criterion.

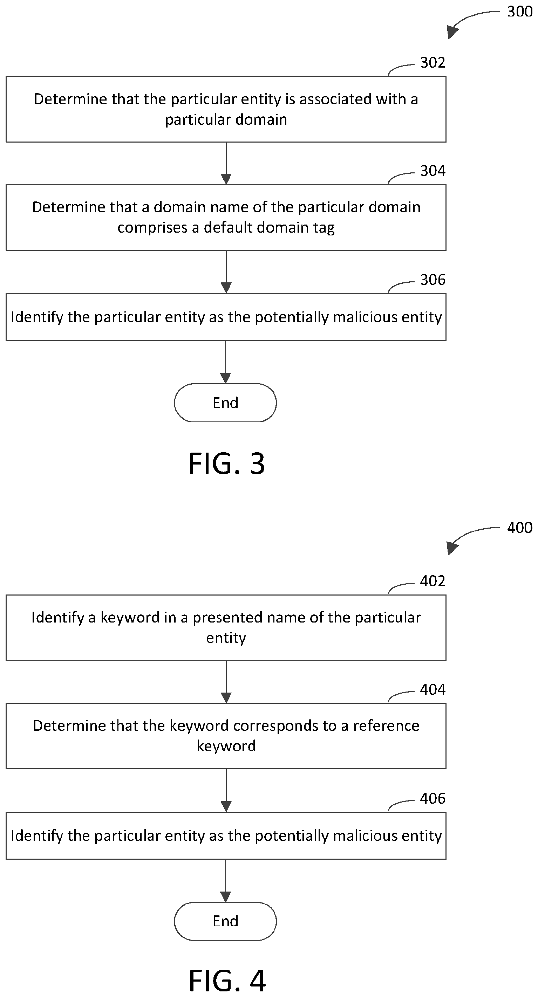

In an example default domain tag embodiment, the method of flowchart 200 further comprises one or more of the steps shown in flowchart 300 of FIG. 3. As shown in FIG. 3, the method of flowchart 300 begins at step 302. In step 302, a determination is made that the particular entity is associated with a particular domain. In an example implementation, the domain determination logic 824 determines that the particular entity is associated with the particular domain. The domain determination logic 824 generates a domain indicator 872, which indicates that the particular entity is associated with the particular domain.

At step 304, a determination is made that a domain name of the particular domain comprises a default domain tag. In an aspect, the default domain tag is incorporated into the domain name of each newly created domain. In an example of this aspect, a user is able to change the domain name of a newly created domain so that the domain name no longer comprises the default domain tag. In an example implementation, the domain name analysis logic 826 determines that a domain name 848 of the particular domain comprises the default domain tag. In an aspect, the domain name analysis logic 826 analyzes the domain indicator 872 to determine the particular domain. In an example of this aspect, the domain name analysis logic 826 determines the domain name 848 of the particular domain by traversing a list that cross-references domains, which include the particular domain, with respective domain names, which include the domain name 848. For instance, the domain name analysis logic 826 may identify the particular domain, as indicated by the domain indicator 872, among the domains in the list and determine that the particular domain is cross-referenced with the domain name 848 in the list. The domain name analysis logic 826 generates domain information 874, which indicates that the domain name 848 of the particular domain comprises the default domain tag.

At step 306, the particular entity is identified as the potentially malicious entity. In an aspect, the particular entity is identified as the potentially malicious entity at step 306 as a result of the acceptance ratio being less than or equal to the threshold acceptance ratio and the domain name of the particular domain, which is associated with the particular entity, comprising the default domain tag. In another aspect, step 306 is included in step 208 shown in FIG. 2. In an example implementation, the maliciousness identification logic 818 identifies the particular entity as the potentially malicious entity. In an aspect, the maliciousness identification logic 818 identifies the particular entity as the potentially malicious entity as a result of the acceptance ratio being less than or equal to the threshold acceptance ratio and the domain name 848 of the particular domain comprising the default domain tag. In another aspect, the maliciousness identification logic 818 analyzes the domain information 874 to determine that the domain name 848 of the particular domain comprises the default domain tag.

In an example keyword embodiment, the method of flowchart 200 further comprises one or more of the steps shown in flowchart 400 of FIG. 4. As shown in FIG. 4, the method of flowchart 400 begins at step 402. In step 402, a keyword is identified in a presented name of the particular entity. In an example implementation, the keyword identification logic 828 identifies the keyword in a presented name 850 of the particular entity. The keyword identification logic 828 generates a keyword indicator 876, which indicates the keyword.

At step 404, determining that the keyword corresponds to a reference keyword. In an example implementation, the keyword correspondence logic 830 determines that the keyword corresponds to a reference keyword 852. In an aspect, the keyword correspondence logic 830 analyzes the keyword indicator 876 to determine the keyword. In an example of this aspect, the keyword correspondence logic 830 determines that the keyword corresponds to the reference keyword by comparing the keyword, as indicated by the keyword indicator 876, and the reference keyword 852. The keyword correspondence logic 830 generates keyword correspondence information 878, which indicates that the keyword corresponds to the reference keyword 852.

At step 406, the particular entity is identified as the potentially malicious entity. In an aspect, the particular entity is identified as the potentially malicious entity at step 406 as a result of the acceptance ratio being less than or equal to the threshold acceptance ratio and the keyword corresponding to the reference keyword. In another aspect, the reference keyword is a keyword that is used to impersonate an entity (e.g., a person or an organization) or a role (e.g., administrator, employee, engineer, technical support representative, or finance department representative). In an example implementation, the maliciousness identification logic 818 identifies the particular entity as the potentially malicious entity. In an aspect, the maliciousness identification logic 818 identifies the particular entity as the potentially malicious entity as a result of the acceptance ratio being less than or equal to the threshold acceptance ratio and the keyword corresponding to the reference keyword 852. In another aspect, the maliciousness identification logic 818 analyzes the keyword correspondence information 878 to determine that the keyword corresponds to the reference keyword 852.

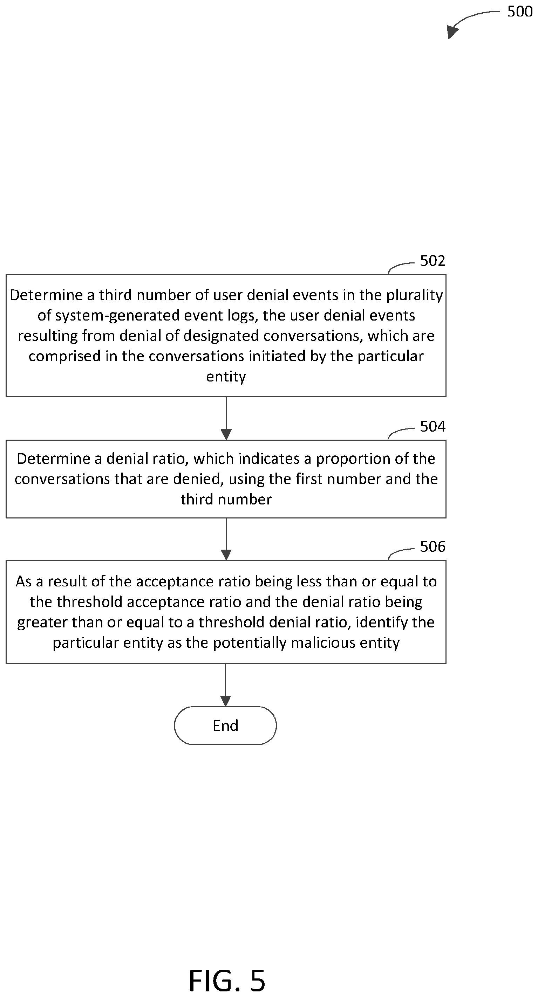

In an example default domain tag embodiment, the method of flowchart 200 further comprises one or more of the steps shown in flowchart 500 of FIG. 5. As shown in FIG. 5, the method of flowchart 500 begins at step 502. In step 502, a third number of user denial events in the plurality of system-generated event logs is determined. The user denial events result from denial of designated conversations, which are included in the conversations initiated by the particular entity. In an example implementation, the response determination logic 816 determines a third number of denial events 840 in the plurality of system-generated event logs 838. The denial events 840 result from the denial of the designated conversations, which are included in the conversations initiated by the particular entity. In an aspect, the response determination logic 816 configures the response information 858 to indicate the third number of the denial events 840 in the plurality of system-generated event logs 838.

At step 504, a denial ratio is determined using the first number and the third number. In an aspect, the denial ratio is calculated by dividing the third number by the first number. In an example of this aspect, the denial ratio is equal to the third number divided by the first number. In an example implementation, the ratio determination logic 814 determines the denial ratio using the first number and the third number. In an aspect, the ratio determination logic 814 analyzes the initiation information 856 to determine the first number. In another aspect, the ratio determination logic 814 analyzes the response information 858 to determine the third number. The ratio determination logic 814 configures the response ratio(s) 866 to include the denial ratio.

At step 506, as a result of the acceptance ratio being less than or equal to the threshold acceptance ratio and the denial ratio being greater than or equal to a threshold denial ratio, the particular entity is identified as the potentially malicious entity. In an aspect, step 506 is included in step 208 shown in FIG. 2. In an example implementation, as a result of the acceptance ratio being less than or equal to the threshold acceptance ratio and the denial ratio being greater than or equal to a threshold denial ratio, the maliciousness identification logic 818 identifies the particular entity as the potentially malicious entity.

As shown in FIG. 6, the method of flowchart 600 begins at step 602. In step 602, a first number of conversation initiation events in a plurality of system-generated event logs is determined. In an aspect, the plurality of system-generated event logs are a plurality of immutable system-generated event logs. In another aspect, the conversation initiation events comprise an identifier that identifies the particular entity. The identifier may comprise (e.g., be) a name of the particular entity or a communication platform user identifier of the particular entity. Examples of a communication platform user identifier include but are not limited to an email address, a social media user identifier, and a telephone number. In an example of this aspect, the identifier is a unique identifier that uniquely identifies the particular entity. In another example of this aspect, the conversation initiation events indicate that the particular entity is the initiator of the respective conversations. The conversation initiation events result from a particular entity initiating (e.g., requesting) conversations. Each of the conversations may be initiated by the particular user via a chat, an instant message, an electronic mail (email) message, a phone call, or a video call. In an aspect, at least one (e.g., all) of the conversations is initiated by the particular entity with multiple other entities (e.g., users). For example a first conversation may be initiated by the particular entity with first users; a second conversation may be initiated by the particular entity with second users, and so on. In an aspect, the conversations are one-on-one conversations initiated by the particular entity with respective individual users. In an example implementation, the initiation determination logic 812 determines a first number of initiation events 844 in a plurality of system-generated event logs 838. The initiation events 844 result from the particular entity initiating conversations. The initiation determination logic 812 generates initiation information 856 to indicate (e.g., specify) the first number of the initiation events 844.

In an example embodiment, the plurality of system-generated event logs are associated with a messaging application (e.g., an email application, an instant messaging application, or a social media application). Examples of a messaging application include but are not limited to a Microsoft Teams^{®} application, developed and distributed by Microsoft Corporation; a Slack^{®} application, developed and distributed by Salesforce, Inc.; Facebook^{®}, Messenger^{®}, and WhatsApp^{®} applications, developed and distributed by Meta Platforms, Inc.; a Telegram^{®} application, developed and distributed by Telegram messenger LLP; a WeChat^{®} application, developed and distributed by Tencent Holdings Limited; a Signal^{®} application, developed and distributed by Signal Technology Foundation; and a Snapchat^{®} application, developed and distributed by Snap Inc.

At step 604, a second number of user denial events in the plurality of system-generated event logs is determined. The user denial events result from denial of identified conversations, which are included in the conversations initiated by the particular entity. Each of the identified conversations may be denied by a user via a chat, an instant message, an email message, a phone call, or a video call. In an aspect, each of the denial events includes an identifier that identifies a user who denies the corresponding identified conversation. In an example implementation, the response determination logic 816 determines a second number of denial events 840 in the plurality of system-generated event logs 838. The denial events 840 result from the denial of the identified conversations, which are included in the conversations initiated by the particular entity. The response determination logic 816 generates response information 858 to indicate (e.g., specify) the second number of the denial events 840.

In an example embodiment, the conversation initiation events result from the particular entity, which is external to a designated organization, initiating the conversations with users that are included in the designated organization. In accordance with this embodiment, the user denial events result from denial of the identified conversations by the users that are included in the designated organization.

In another example embodiment, the conversation initiation events result from the particular entity, which is external to a designated tenant of a message-enabled service, initiating the conversations with users that are included in the designated tenant. In accordance with this embodiment, the user denial events result from denial of the identified conversations by the users that are included in the designated tenant.

At step 606, a denial ratio is determined using the first number and the second number. The denial ratio indicates a proportion of the conversations that are denied. In an aspect, the denial ratio is calculated by dividing the second number by the first number. In an example of this aspect, the denial ratio is equal to the second number divided by the first number. In an example implementation, the ratio determination logic 814 determines the denial ratio using the first number, as indicated by the initiation information 856, and the second number, as indicated by the response information 858. The ratio determination logic 814 generates response ratio(s) 866, which include the denial ratio.

At step 608, as a result of the denial ratio being greater than or equal to a threshold denial ratio, the particular entity is identified as a potentially malicious entity. In an aspect, the threshold denial ratio is 0.2, 0.3, 0.4, or 0.5. In an example implementation, as a result of the denial ratio being greater than or equal to a threshold denial ratio, the maliciousness identification logic 818 identifies the particular entity as the potentially malicious entity. In an aspect, the maliciousness identification logic 818 analyzes the response ratio(s) 866 to determine the denial ratio. In accordance with this aspect, the maliciousness identification logic 818 analyzes threshold response ratio(s) 854 to determine the threshold denial ratio. In further accordance with this aspect, the maliciousness identification logic 818 determines that the denial ratio is greater than or equal to the threshold denial ratio by comparing the denial ratio, as indicated by the response ratio(s) 866, and the threshold denial ratio, as indicated by the threshold response ratio(s) 854. The maliciousness identification logic 818 generates a security action instruction 860 as a result of identifying the particular entity as the potentially malicious entity. The security action instruction 860 indicates that a security action 870 is to be performed. In an example, the security action instruction 860 instructs the security action logic 820 to perform the security action 870.

In an example embodiment, the particular entity is identified as the potentially malicious entity at step 608 as a result of the denial ratio being greater than or equal to the threshold denial ratio and the first number being greater than or equal to a threshold number. In an aspect, threshold number is 2, 3, 4, 6, or 10.

At step 610, as a result of identifying the particular entity as the potentially malicious entity, a security action is performed with regard to the potentially malicious entity. In an aspect, the security action is a remedial action or a preventative action. A remedial action is an action performed in response to harm that is caused to a system and/or a user of the system. A preventative action is an action performed to inhibit (e.g., prevent) a harm from being caused to a system and/or a user of the system. Examples of a security action include but are not limited to notifying an administrative user (and/or users with whom the particular entity initiates the conversations) that the particular entity is potentially malicious, blocking (e.g., preventing) the particular entity and/or a tenant to which the particular entity belongs from further communication with the users (e.g., anyone in an organization that includes the users), and blocking the particular entity from accessing an application that was used to initiate the conversations. In an example implementation, as a result of the particular entity being identified as the potentially malicious entity, the security action logic 860 performs the security action 870 with regard to the potentially malicious entity. In an aspect, the security action logic 860 performs the security action 870 with regard to the potentially malicious entity in response to receipt of the security action instruction 860 (e.g., in response to the security action instruction 860 indicating that the security action 870 is to be performed).

In an example implementation, one or more steps 602, 604, 606, 608, and/or 610 of flowchart 600 are not performed. In another example implementation, step(s) in addition to or in lieu of steps 602, 604, 606, 608, and/or 610 are performed. For instance, in an example enterprise embodiment, the method of flowchart 600 further comprises determining that the particular entity is added to an enterprise at a time instance. In an example implementation, the addition determination logic 822 determines that the particular entity is added to the enterprise at the time instance. The addition determination logic 822 generates addition information 846, which indicates that the particular entity is added to the enterprise at the time instance. For instance, the addition information 846 may specify the particular entity, the enterprise, and the time instance. In accordance with this embodiment, determining the first number of the conversation initiation events at step 602 comprises determining the first number of the conversation initiation events, which result from the particular entity initiating the conversations with other users in the enterprise within a specified period of time that begins at the time instance. In an example implementation, the initiation determination logic 812 analyzes the addition information 846 to determine the time instance at which the particular entity is added to the enterprise. In accordance with this implementation, the initiation determination logic 812 analyzes the initiation information 856 to determine time instances at which the particular entity initiates the conversations with the other users in the enterprise. In further accordance with this implementation, the initiation determination logic 812 compares the time instance at which the particular entity is added to the enterprise, as indicated by the addition information 846, and the time instances at which the particular entity initiates the conversations with the other users in the enterprise, as indicated by the initiation information 856, to determine corresponding time differences. In further accordance with this implementation, the initiation determination logic 812 compares the corresponding time differences and the specified period of time to determine that the conversations are initiated by the particular entity with the other users in the enterprise within the specified period of time. In further accordance with this implementation, the initiation determination logic 812 determines the first number by counting the conversation initiation events, which result from the particular entity initiating the conversations. In further accordance with this embodiment, the user denial events result from denial of the identified conversations by at least a subset of the other users in the enterprise.

In an example tenant embodiment, the method of flowchart 600 further comprises determining that the particular entity is added to a tenant of a message-enabled service at a time instance. In an example implementation, the addition determination logic 822 determines that the particular entity is added to the tenant of the message-enabled service at the time instance. The addition determination logic 822 generates addition information 846, which indicates that the particular entity is added to the tenant of the message-enabled service at the time instance. For instance, the addition information 846 may specify the particular entity, the tenant, and the time instance. In accordance with this embodiment, determining the first number of the conversation initiation events at step 602 comprises determining the first number of the conversation initiation events, which result from the particular entity initiating the conversations with other users in the tenant within a specified period of time that begins at the time instance. In an example implementation, the initiation determination logic 812 analyzes the addition information 846 to determine the time instance at which the particular entity is added to the tenant of the message-enabled service. In accordance with this implementation, the initiation determination logic 812 analyzes the initiation information 856 to determine time instances at which the particular entity initiates the conversations with the other users in the tenant. In further accordance with this implementation, the initiation determination logic 812 compares the time instance at which the particular entity is added to the tenant of the message-enabled service, as indicated by the addition information 846, and the time instances at which the particular entity initiates the conversations with the other users in the tenant, as indicated by the initiation information 856, to determine corresponding time differences. In further accordance with this implementation, the initiation determination logic 812 compares the corresponding time differences and the specified period of time to determine that the conversations are initiated by the particular entity with the other users in the tenant within the specified period of time. In further accordance with this implementation, the initiation determination logic 812 determines the first number by counting the conversation initiation events, which result from the particular entity initiating the conversations. In further accordance with this embodiment, the user denial events result from denial of the identified conversations by at least a subset of the other users in the tenant.

In an example sliding window embodiment, the method of flowchart 600 further comprises selecting the plurality of system-generated event logs as a result of a plurality of respective time stamps, which are associated with the plurality of system-generated event logs, indicating a plurality of respective time instances that are included in a sliding window of time. A sliding window of time is a window of time having a starting time and an ending time that increment with passage of time. In an example, the sliding window of time is a fixed duration of time having an ending time that is continuously or iteratively updated to be a current time. In an accordance with this example, the ending time is equal to the start time plus the fixed duration of time. In an aspect, the fixed duration is 12 hours, 1 day, 2 days, 4 days, or 7 days. In another aspect, the sliding window of time is iteratively updated every 30 minutes, each hour, or every 2 hours. In an example implementation, the initiation determination logic 812 selects the plurality of system-generated event logs 838 as a result of the plurality of respective time stamps, which are associated with the plurality of system-generated event logs 838, indicating the plurality of respective time instances that are included in the sliding window of time.

In an example initiation communication embodiment, the method of flowchart 600 further comprises determining that a specified conversation initiation event, which is included in the conversation initiation events, results from a temporally first communication of the particular entity that is directed to a user in a particular organization. In an example implementation, the initiation determination logic 812 determines that the specified conversation initiation event, which is included in the initiation events 844, results from the temporally first communication of the particular entity that is directed to a user in the particular organization. The initiation determination logic 812 generates communication order information 864, which indicates that the specified conversation initiation event results from the temporally first communication of the particular entity that is directed to a user in the particular organization. For example, the communication order information 864 may indicate an order of communications that are generated by the particular entity, users to whom the communications are directed, and so on. In accordance with this embodiment, the particular entity is identified as the potentially malicious entity at step 608 as a result of the denial ratio being greater than or equal to the threshold denial ratio and the specified conversation initiation event resulting from the temporally first communication of the particular entity that is directed to a user in the particular organization. In an example implementation, the maliciousness identification logic 818 analyzes the communication order information 864 to determine that the specified conversation initiation event results from the temporally first communication of the particular entity that is directed to a user in the particular organization.

In another example initiation communication embodiment, the method of flowchart 600 further comprises determining that a specified conversation initiation event, which is included in the conversation initiation events, results from a temporally first communication of the particular entity that is directed to a user in a particular tenant of a message-enabled service. In an example implementation, the initiation determination logic 812 determines that the specified conversation initiation event, which is included in the initiation events 844, results from the temporally first communication of the particular entity that is directed to a user in the particular tenant of the message-enabled service. The initiation determination logic 812 generates communication order information 864, which indicates that the specified conversation initiation event results from the temporally first communication of the particular entity that is directed to a user in the particular tenant of the message-enabled service. In accordance with this embodiment, the particular entity is identified as the potentially malicious entity at step 608 as a result of the denial ratio being greater than or equal to the threshold denial ratio and the specified conversation initiation event resulting from the temporally first communication of the particular entity that is directed to a user in the particular tenant. In an example implementation, the maliciousness identification logic 818 analyzes the communication order information 864 to determine that the specified conversation initiation event results from the temporally first communication of the particular entity that is directed to a user in the particular tenant of the message-enabled service.

In an example organization embodiment, the conversation initiation events result from the particular entity initiating the conversations with users that are included in a particular organization. In accordance with this embodiment, the user denial events result from denial of the identified conversations by the users that are included in the particular organization. In further accordance with this embodiment, the method of flowchart 600 further comprises determining that a likelihood of a security threat to the particular organization increases to an increased likelihood (e.g., an increased likelihood that is greater than or equal to a likelihood threshold). For instance, the likelihood threshold may be 30%, 40%, or 50%. In an example implementation, the security threat logic 832 determines that the likelihood of the security threat to the particular organization increases to the increased likelihood. In accordance with this implementation, the security threat logic 832 generates security threat information 880, which indicates that the likelihood of the security threat to the particular organization has increased to the increased likelihood. In further accordance with this embodiment, the method of flowchart 600 further comprises, as a result of the likelihood of the security threat to the particular organization increasing to the increased likelihood, the threshold denial ratio is decreased. In an example implementation, as a result of the likelihood of the security threat to the particular organization increasing to the increased likelihood, the threshold ratio logic 834 decreases the threshold denial ratio. The threshold denial ratio, which is increased by the threshold ratio logic 834 is included in the threshold response ratio(s) 854. In an aspect, the threshold ratio logic 834 generates (e.g., sets) the threshold response ratio(s) 854. For instance, the threshold ratio logic 834 may maintain or manage the threshold response ratio(s) 854. In another aspect, the threshold ratio logic 834 dynamically adjusts one or more of the threshold response ratio(s) based on any of a variety of factors, such as a likelihood of a security threat, an intensity of a potential security threat, or identification of a known malicious entity interacting with a system or user of the particular organization.

In an example default domain tag embodiment, the method of flowchart 600 further comprises one or more of the steps shown in flowchart 300 of FIG. 3, which is described in further detail above. In an aspect of this embodiment, the particular entity is identified as the potentially malicious entity at step 306 as a result of the denial ratio being greater than or equal to the threshold denial ratio and the domain name of the particular domain, which is associated with the particular entity, comprising the default domain tag. In an example implementation, as a result of the denial ratio being greater than or equal to the threshold denial ratio and the domain name 848 of the particular domain comprising the default domain tag, the maliciousness identification logic 818 identifies the particular entity as the potentially malicious entity.

In an example keyword embodiment, the method of flowchart 600 further comprises one or more of the steps shown in flowchart 400 of FIG. 4, which is described in further detail above. In an aspect of this embodiment, the particular entity is identified as the potentially malicious entity at step 406 as a result of the denial ratio being greater than or equal to the threshold denial ratio and the keyword corresponding to the reference keyword. In an example implementation, as a result of the denial ratio being greater than or equal to the threshold denial ratio and the keyword corresponding to the reference keyword 852, the maliciousness identification logic 818 identifies the particular entity as the potentially malicious entity.

As shown in FIG. 7, the method of flowchart 700 begins at step 702. In step 702, a first number of user acceptance events in a plurality of system-generated event logs is determined. The user acceptance events result from acceptance of first conversations in a plurality of conversations initiated by a particular entity. In an example implementation, the response determination logic 816 determines a first number of acceptance events 842 in a plurality of system-generated event logs 838. The acceptance events 842 result from acceptance of the first conversations in the plurality of conversations initiated by the particular entity. The response determination logic 816 generates response information 858 to indicate (e.g., specify) the first number of the acceptance events 842.

At step 704, a second number of user denial events in the plurality of system-generated event logs is determined. The user denial events result from denial of second conversations in the plurality of conversations initiated by the particular entity. In an example implementation, the response determination logic 816 determines a second number of denial events 840 in the plurality of system-generated event logs 838. The denial events 840 result from denial of the second conversations in the plurality of conversations initiated by the particular entity. The response determination logic 816 configures the response information 858 to indicate (e.g., specify) the second number of the denial events 840.

At step 706, an acceptance-denial ratio is determined using the first number and the second number. The acceptance-denial ratio indicates a comparison of a first determined number of the conversations that are accepted and a second determined number of the conversations that are denied. The first number and the first determined number are same. The second number and the second determined number are same. In an aspect, the acceptance-denial ratio is calculated by dividing the first number by the second number. In an example of this aspect, the acceptance-denial ratio is equal to the first number divided by the second number. In an example implementation, the ratio determination logic 814 determines the acceptance-denial ratio using the first number and the second number. The ratio determination logic 814 generates response ratio(s) 866, which include the acceptance-denial ratio.

At step 708, as a result of the acceptance-denial ratio being less than or equal to a threshold acceptance-denial ratio, the particular entity is identified as a potentially malicious entity. In an example implementation, as a result of the acceptance-denial ratio being less than or equal to a threshold acceptance-denial ratio, the maliciousness identification logic 818 identifies the particular entity as the potentially malicious entity. In an aspect, the maliciousness identification logic 818 analyzes the response ratio(s) 866 to determine the acceptance-denial ratio. In accordance with this aspect, the maliciousness identification logic 818 analyzes threshold response ratio(s) 854 to determine the threshold acceptance-denial ratio. In further accordance with this aspect, the maliciousness identification logic 818 determines that the acceptance-denial ratio is less than or equal to the threshold acceptance-denial ratio by comparing the acceptance-denial ratio, as indicated by the response ratio(s) 866, and the threshold acceptance-denial ratio, as indicated by the threshold response ratio(s) 854. The maliciousness identification logic 818 generates a security action instruction 860 as a result of identifying the particular entity as the potentially malicious entity. The security action instruction 860 indicates that a security action 870 is to be performed. In an example, the security action instruction 860 instructs the security action logic 820 to perform the security action 870.

At step 710, as a result of identifying the particular entity as the potentially malicious entity, a security action is performed with regard to the potentially malicious entity. In an example implementation, as a result of the particular entity being identified as the potentially malicious entity, the security action logic 860 performs the security action 870 with regard to the potentially malicious entity. In an aspect, the security action logic 860 performs the security action 870 with regard to the potentially malicious entity in response to receipt of the security action instruction 860 (e.g., in response to the security action instruction 860 indicating that the security action 870 is to be performed).

In an example implementation, one or more steps 702, 704, 706, 708, and/or 710 of flowchart 700 are not performed. In another example implementation, step(s) in addition to or in lieu of steps 702, 704, 706, 708, and/or 710 are performed. Any of the embodiments described above with regard to flowchart 200 shown in FIG. 2 are applicable to flowchart 700 shown in FIG. 7 (e.g., by replacing references to "acceptance ratio" with "acceptance-denial ratio" and by replacing references to "threshold acceptance ratio" with "threshold acceptance-denial ratio"). Any of the embodiments described above with regard to flowchart 600 shown in FIG. 6 are applicable to flowchart 700 shown in FIG. 7 (e.g., by replacing references to "denial ratio" with "acceptance-denial ratio," by replacing references to "threshold denial ratio" with "threshold acceptance-denial ratio," and by replacing indications that the denial ratio is greater than or equal to the threshold denial ratio to indicate that the acceptance-denial ratio is less than or equal to the threshold acceptance-denial ratio).

Although the operations of some of the disclosed methods are described in a particular, sequential order for convenient presentation, it should be understood that this manner of description encompasses rearrangement, unless a particular ordering is required by specific language set forth herein. In an example, operations described sequentially are in some cases rearranged or performed concurrently. Moreover, for the sake of simplicity, the attached figures may not show the various ways in which the disclosed methods may be used in conjunction with other methods.

Any one or more of the ratio-based maliciousness identification logic 108, the ratio-based maliciousness identification logic 808, the initiation determination logic 812, the ratio determination logic 814, the response determination logic 816, the maliciousness identification logic 818, the security action logic 820, the addition determination logic 822, the domain determination logic 824, the domain name analysis logic 826, the keyword identification logic 828, the keyword correspondence logic 830, the security threat logic 832, the threshold ratio logic 834, the duration logic 836, flowchart 200, flowchart 300, flowchart 400, flowchart 500, flowchart 600, and/or flowchart 700 may be implemented in hardware, software, firmware, or any combination thereof.

In an example, any one or more of the ratio-based maliciousness identification logic 108, the ratio-based maliciousness identification logic 808, the initiation determination logic 812, the ratio determination logic 814, the response determination logic 816, the maliciousness identification logic 818, the security action logic 820, the addition determination logic 822, the domain determination logic 824, the domain name analysis logic 826, the keyword identification logic 828, the keyword correspondence logic 830, the security threat logic 832, the threshold ratio logic 834, the duration logic 836, flowchart 200, flowchart 300, flowchart 400, flowchart 500, flowchart 600, and/or flowchart 700 are implemented, at least in part, as computer program code configured to be executed in one or more processors.

In another example, any one or more of the ratio-based maliciousness identification logic 108, the ratio-based maliciousness identification logic 808, the initiation determination logic 812, the ratio determination logic 814, the response determination logic 816, the maliciousness identification logic 818, the security action logic 820, the addition determination logic 822, the domain determination logic 824, the domain name analysis logic 826, the keyword identification logic 828, the keyword correspondence logic 830, the security threat logic 832, the threshold ratio logic 834, the duration logic 836, flowchart 200, flowchart 300, flowchart 400, flowchart 500, flowchart 600, and/or flowchart 700 are implemented, at least in part, as hardware logic/electrical circuitry. In an example implementation, such hardware logic/electrical circuitry includes one or more hardware logic components. Examples of a hardware logic component include but are not limited to a field-programmable gate array (FPGA), an application-specific integrated circuit (ASIC), an application-specific standard product (ASSP), a system-on-a-chip system (SoC), a complex programmable logic device (CPLD), etc. In an example, a SoC includes an integrated circuit chip that includes one or more of a processor (e.g., a microcontroller, microprocessor, digital signal processor (DSP), etc.), memory, one or more communication interfaces, and/or further circuits and/or embedded firmware to perform its functions.

### II. Further Discussion of Some Example Embodiments

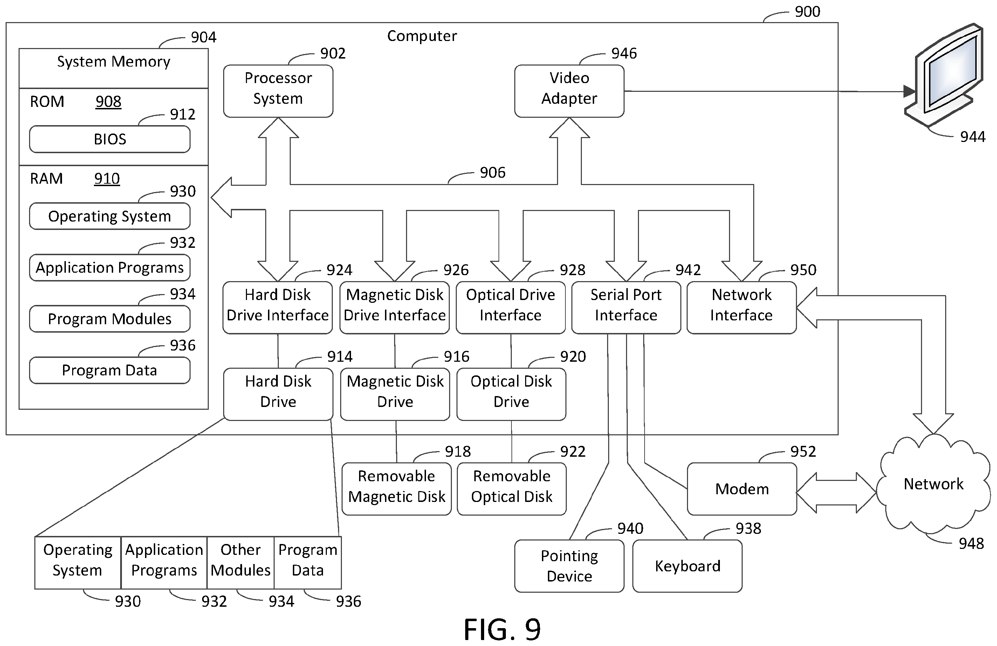

(A1) An example system (Figure 1, 102A-102M, 106A-106N; Figure 8, 800; Figure 9, 900) comprises a processor system (Figure 9, 902) and a memory (Figure 9, 904, 908, 910) that stores computer-executable instructions. The computer-executable instructions are executable by the processor system to at least determine (Figure 2, 202) a first number of conversation initiation events (Figure 8, 844) in a plurality of system-generated event logs (Figure 8, 838). The conversation initiation events result from a particular entity initiating conversations. The computer-executable instructions are executable by the processor system further to at least determine (Figure 2, 204) a second number of user acceptance events (Figure 8, 842) in the plurality of system-generated event logs. The user acceptance events result from acceptance of identified conversations, which are included in the conversations initiated by the particular entity. The computer-executable instructions are executable by the processor system further to at least determine (Figure 2, 206) an acceptance ratio (Figure 8, 866), which indicates a proportion of the conversations that are accepted, using the first number of the conversation initiation events and the second number of the user acceptance events. The computer-executable instructions are executable by the processor system further to at least, as a result of the acceptance ratio being less than or equal to a threshold acceptance ratio, identify (Figure 2, 208) the particular entity as a potentially malicious entity. The computer-executable instructions are executable by the processor system further to at least, as a result of the particular entity being identified as the potentially malicious entity, perform (Figure 2, 210) a security action (Figure 8, 870) with regard to the potentially malicious entity.

(A2) In the example system of A1, wherein the conversation initiation events result from the particular entity, which is external to a designated organization, initiating the conversations with users that are included in the designated organization; and wherein the user acceptance events result from acceptance of the identified conversations by the users that are included in the designated organization.

(A3) In the example system of any of A1-A2, wherein the conversation initiation events result from the particular entity, which is external to a designated tenant of a message-enabled service, initiating the conversations with users that are included in the designated tenant; and wherein the user acceptance events result from acceptance of the identified conversations by the users that are included in the designated tenant.

(A4) In the example system of any of A1-A3, wherein the computer-executable instructions are executable by the processor system to at least: determine that the particular entity is added to an enterprise at a time instance; and determine the first number of the conversation initiation events, which result from the particular entity initiating the conversations with other users in the enterprise within a specified period of time that begins at the time instance; and wherein the user acceptance events result from acceptance of the identified conversations by at least a subset of the other users in the enterprise.

(A5) In the example system of any of A1-A4, wherein the computer-executable instructions are executable by the processor system to at least: determine that the particular entity is added to a tenant of a message-enabled service at a time instance; and determine the first number of the conversation initiation events, which result from the particular entity initiating the conversations with other users in the tenant within a specified period of time that begins at the time instance; and wherein the user acceptance events result from acceptance of the identified conversations by at least a subset of the other users in the tenant.

(A6) In the example system of any of A1-A5, wherein the computer-executable instructions are executable by the processor system further to at least: select the plurality of system-generated event logs as a result of a plurality of respective time stamps, which are associated with the plurality of system-generated event logs, indicating a plurality of respective time instances that are included in a sliding window of time.

(A7) In the example system of any of A1-A6, wherein the computer-executable instructions are executable by the processor system to at least: determine that the particular entity is associated with a particular domain; determine that a domain name of the particular domain comprises a default domain tag; and as a result of the acceptance ratio being less than or equal to the threshold acceptance ratio and the domain name of the particular domain, which is associated with the particular entity, comprising the default domain tag, identify the particular entity as the potentially malicious entity.

(A8) In the example system of any of A1-A7, wherein the computer-executable instructions are executable by the processor system to at least: identify a keyword in a presented name of the particular entity; determine that the keyword corresponds to a reference keyword; and as a result of the acceptance ratio being less than or equal to the threshold acceptance ratio and the keyword corresponding to the reference keyword, identify the particular entity as the potentially malicious entity.

(A9) In the example system of any of A1-A8, wherein the computer-executable instructions are executable by the processor system to at least: determine that a specified conversation initiation event, which is included in the conversation initiation events, results from a temporally first communication of the particular entity that is directed to a user in a particular organization; and as a result of the acceptance ratio being less than or equal to the threshold acceptance ratio and the specified conversation initiation event resulting from the temporally first communication of the particular entity that is directed to a user in the particular organization, identify the particular entity as the potentially malicious entity.

(A10) In the example system of any of A1-A9, wherein the computer-executable instructions are executable by the processor system to at least: determine that a specified conversation initiation event, which is included in the conversation initiation events, results from a temporally first communication of the particular entity that is directed to a user in a particular tenant of a message-enabled service; and as a result of the acceptance ratio being less than or equal to the threshold acceptance ratio and the specified conversation initiation event resulting from the temporally first communication of the particular entity that is directed to a user in the particular tenant, identify the particular entity as the potentially malicious entity.

(A11) In the example system of any of A1-A10, wherein the conversation initiation events result from the particular entity initiating the conversations with users that are included in a particular organization; wherein the user acceptance events result from acceptance of the identified conversations by the users that are included in the particular organization; and wherein the computer-executable instructions are executable by the processor system further to at least: determine that a likelihood of a security threat to the particular organization increases to an increased likelihood; and as a result of the likelihood of the security threat to the particular organization increasing to the increased likelihood, increase the threshold acceptance ratio.

(A12) In the example system of any of A1-A11, wherein the conversations are one-on-one conversations initiated by the particular entity with respective individual users.

(A13) In the example system of any of A1-A12, wherein the computer-executable instructions are executable by the processor system to at least: as a result of the acceptance ratio being less than or equal to the threshold acceptance ratio and the first number being greater than or equal to a threshold number, identify the particular entity as the potentially malicious entity.

(A14) In the example system of any of A1-A13, wherein identified conversation initiation events are associated with respective first time stamps that indicate respective first time instances at which the identified conversations are initiated; wherein the user acceptance events are associated with respective second time stamps that indicate respective second time instances at which the identified conversations are accepted; and wherein the computer-executable instructions are executable by the processor system to at least: determine durations of time periods that begin at the respective first time instances indicated by the respective first time stamps and that end at the respective second time instances indicated by the respective second time stamps; and as a result of the acceptance ratio being less than or equal to the threshold acceptance ratio and the durations of the time periods satisfying a time criterion, identify the particular entity as the potentially malicious entity.

(A 15) In the example system of any of A1-A14, wherein the computer-wherein the computer-executable instructions are executable by the processor system to at least: determine a third number of user denial events in the plurality of system-generated event logs, the user denial events resulting from denial of designated conversations, which are included in the conversations initiated by the particular entity; determines a denial ratio, which indicates a proportion of the conversations that are denied, using the first number of the conversation initiation events and the third number of the user denial events; and as a result of the acceptance ratio being less than or equal to the threshold acceptance ratio and the denial ratio being greater than or equal to a threshold denial ratio, identify the particular entity as the potentially malicious entity.

(B1) An example method is implemented by a computing system (Figure 1, 102A-102M, 106A-106N; Figure 8, 800; Figure 9, 900). The method comprises determining (Figure 6, 602) a first number of conversation initiation events (Figure 8, 844) in a plurality of system-generated event logs (Figure 8, 838). The conversation initiation events result from a particular entity initiating conversations. The method further comprises determining (Figure 6, 604) a second number of user denial events (Figure 8, 840) in the plurality of system-generated event logs. The user denial events result from denial of designated conversations, which are included in the conversations initiated by the particular entity. The method further comprises determining (Figure 6, 606) a denial ratio (Figure 8, 866), which indicates a proportion of the conversations that are denied, using the first number of the conversation initiation events and the second number of the user denial events. The method further comprises, as a result of the denial ratio being greater than or equal to a threshold denial ratio, identifying (Figure 6, 608) the particular entity as a potentially malicious entity. The method further comprises, as a result of identifying the particular entity as the potentially malicious entity, performing (Figure 6, 610) a security action (Figure 8, 870) with regard to the potentially malicious entity.

(B2) In the example method of B1, wherein the conversation initiation events result from the particular entity, which is external to a designated organization, initiating the conversations with users that are included in the designated organization; and wherein the user denial events result from denial of the designated conversations by the users that are included in the designated organization.

(B3) In the example method of any of B1-B2, wherein the conversation initiation events result from the particular entity, which is external to a designated tenant of a message-enabled service, initiating the conversations with users that are included in the designated tenant; and wherein the user denial events result from denial of the designated conversations by the users that are included in the designated tenant.

(B4) In the example method of any of B1-B3, further comprising: determining that the particular entity is added to an enterprise at a time instance; wherein determining the first number of the conversation initiation events comprises: determining the first number of the conversation initiation events, which result from the particular entity initiating the conversations with other users in the enterprise within a specified period of time that begins at the time instance; and wherein the user denial events result from denial of the designated conversations by at least a subset of the other users in the enterprise.

(B5) In the example method of any of B 1-B4, further comprising: determining that the particular entity is added to a tenant of a message-enabled service at a time instance; wherein determining the first number of the conversation initiation events comprises: determining the first number of the conversation initiation events, which result from the particular entity initiating the conversations with other users in the tenant within a specified period of time that begins at the time instance; and wherein the user denial events result from denial of the designated conversations by at least a subset of the other users in the tenant.

(B6) In the example method of any of B1-B5, further comprising: selecting the plurality of system-generated event logs as a result of a plurality of respective time stamps, which are associated with the plurality of system-generated event logs, indicating a plurality of respective time instances that are included in a sliding window of time.

(B7) In the example method of any of B 1-B6, further comprising: determining that the particular entity is associated with a particular domain; and determining that a domain name of the particular domain comprises a default domain tag; wherein identifying the particular entity as the potentially malicious entity comprises: as a result of the denial ratio being greater than or equal to the threshold denial ratio and the domain name of the particular domain, which is associated with the particular entity, comprising the default domain tag, identifying the particular entity as the potentially malicious entity.

(B8) In the example method of any of B1-B7, further comprising: identifying a keyword in a presented name of the particular entity; and determining that the keyword corresponds to a reference keyword; wherein identifying the particular entity as the potentially malicious entity comprises: as a result of the denial ratio being greater than or equal to the threshold denial ratio and the keyword corresponding to the reference keyword, identifying the particular entity as the potentially malicious entity.

(B9) In the example method of any of B1-B8, further comprising: determining that a specified conversation initiation event, which is included in the conversation initiation events, results from a temporally first communication of the particular entity that is directed to a user in a particular organization; wherein identifying the particular entity as the potentially malicious entity comprises: as a result of the denial ratio being greater than or equal to the threshold denial ratio and the specified conversation initiation event resulting from the temporally first communication of the particular entity that is directed to a user in the particular organization, identifying the particular entity as the potentially malicious entity.

(B10) In the example method of any of B1-B9, further comprising: determining that a specified conversation initiation event, which is included in the conversation initiation events, results from a temporally first communication of the particular entity that is directed to a user in a particular tenant of a message-enabled service; wherein identifying the particular entity as the potentially malicious entity comprises: as a result of the denial ratio being greater than or equal to the threshold denial ratio and the specified conversation initiation event resulting from the temporally first communication of the particular entity that is directed to a user in the particular tenant, identifying the particular entity as the potentially malicious entity.

(B11) In the example method of any of B1-B10, wherein the conversation initiation events result from the particular entity initiating the conversations with users that are included in a particular organization; wherein the user denial events result from denial of the identified conversations by the users that are included in the particular organization; and wherein the method further comprises: determining that a likelihood of a security threat to the particular organization increases to an increased likelihood; and as a result of the likelihood of the security threat to the particular organization increasing to the increased likelihood, decreasing the threshold denial ratio.

(B12) In the example method of any of B1-B11, wherein the conversations are one-on-one conversations initiated by the particular entity with respective individual users.

(B13) In the example method of any of B1-B12, wherein identifying the particular entity as the potentially malicious entity comprises: as a result of the denial ratio being greater than or equal to the threshold denial ratio and the first number being greater than or equal to a threshold number, identifying the particular entity as the potentially malicious entity.

(C1) An example computer program product (Figure 9, 918, 922) comprises a computer-readable storage medium having instructions recorded thereon for enabling a processor-based system (Figure 1, 102A-102M, 106A-106N; Figure 8, 800; Figure 9, 900) to perform operations. The operations comprise determining (Figure 7, 702) a first number of user acceptance events (Figure 8, 842) in a plurality of system-generated event logs (Figure 8, 838). The user acceptance events result from acceptance of first conversations in a plurality of conversations initiated by a particular entity. The operations further comprise determining (Figure 7, 704) a second number of user denial events (Figure 8, 840) in the plurality of system-generated event logs. The user denial events result from denial of second conversations in the plurality of conversations initiated by the particular entity. The operations further comprise determining (Figure 7, 706) an acceptance-denial ratio (Figure 8, 866), which indicates a comparison of a first determined number of the conversations that are accepted and a second determined number of the conversations that are denied, using the first number of the user acceptance events and the second number of the user denial events. The first number and the first determined number are same. The second number and the second determined number are same. The operations further comprise, as a result of the acceptance-denial ratio being less than or equal to a threshold acceptance-denial ratio, identifying (Figure 7, 708) the particular entity as a potentially malicious entity. The operations further comprise, as a result of identifying the particular entity as the potentially malicious entity, performing (Figure 7, 710) a security action (Figure 8, 870) with regard to the potentially malicious entity.

(D1) Techniques are described herein that are capable of identifying a potentially malicious entity based on conversation acceptance and/or denial ratio(s). A number of conversation initiation events, a number of acceptance events, and/or a number of denial events in a plurality of system-generated event logs, is determined. The conversation initiation events result from a particular entity initiating conversations. The user acceptance events result from acceptance of at least a subset of the conversations. The user denial events result from denial of at least a subset of the conversations. A response ratio is determined using a first number selected from those mentioned above and a second number selected from those mentioned above. The particular entity is identified as a potentially malicious entity as a result of the response ratio satisfying a criterion. A security action is performed with regard to the potentially malicious entity.

### III. Example Computer System

FIG. 9 depicts an example computer 900 in which embodiments may be implemented. Any one or more of the user devices 102A-102M and/or any one or more of the servers 106A-106N shown in FIG. 1 and/or the computing system 800 shown in FIG. 8 may be implemented using computer 900, including one or more features of computer 900 and/or alternative features. In an example, computer 900 is a general-purpose computing device in the form of a conventional personal computer, a mobile computer, or a workstation, for example. In another example, computer 900 is a special purpose computing device. The description of computer 900 provided herein is provided for purposes of illustration, and is not intended to be limiting. Embodiments may be implemented in further types of computer systems, as would be known to persons skilled in the relevant art(s).

As shown in FIG. 9, computer 900 includes a processor system 902, a system memory 904, and a bus 906 that couples various system components including system memory 904 to processor system 902. Bus 906 represents one or more of any of several types of bus structures, including a memory bus or memory controller, a peripheral bus, an accelerated graphics port, and a processor or local bus using any of a variety of bus architectures. System memory 904 includes read only memory (ROM) 908 and random access memory (RAM) 910. A basic input/output system 912 (BIOS) is stored in ROM 908.

Computer 900 also has one or more of the following drives: a hard disk drive 914 for reading from and writing to a hard disk, a magnetic disk drive 916 for reading from or writing to a removable magnetic disk 918, and an optical disk drive 920 for reading from or writing to a removable optical disk 922 such as a CD ROM, DVD ROM, or other optical media. Hard disk drive 914, magnetic disk drive 916, and optical disk drive 920 are connected to bus 906 by a hard disk drive interface 924, a magnetic disk drive interface 926, and an optical drive interface 928, respectively. The drives and their associated computer-readable storage media provide nonvolatile storage of computer-readable instructions, data structures, program modules and other data for the computer. Although a hard disk, a removable magnetic disk and a removable optical disk are described, other types of computer-readable storage media can be used to store data, such as flash memory cards, digital video disks, random access memories (RAMs), read only memories (ROM), and the like.

A number of program modules may be stored on the hard disk, magnetic disk, optical disk, ROM, or RAM. These programs include an operating system 930, one or more application programs 932, other program modules 934, and program data 936. In an example, application programs 932 and/or program modules 934 include computer program logic for implementing any one or more of (e.g., at least a portion of) the ratio-based maliciousness identification logic 108, the ratio-based maliciousness identification logic 808, the initiation determination logic 812, the ratio determination logic 814, the response determination logic 816, the maliciousness identification logic 818, the security action logic 820, the addition determination logic 822, the domain determination logic 824, the domain name analysis logic 826, the keyword identification logic 828, the keyword correspondence logic 830, the security threat logic 832, the threshold ratio logic 834, the duration logic 836, flowchart 200 (including any step of flowchart 200), flowchart 300 (including any step of flowchart 300), flowchart 400 (including any step of flowchart 400), flowchart 500 (including any step of flowchart 500), flowchart 600 (including any step of flowchart 600), and/or flowchart 700 (including any step of flowchart 700), as described herein.

A user may enter commands and information into the computer 900 through input devices, such as keyboard 938 and pointing device 940. Other examples of an input device (not shown) include but are not limited to a microphone, a joystick, a game pad, a satellite dish, a scanner, a touch screen, a camera, an accelerometer, and a gyroscope. These and other input devices often are connected to the processor system 902 through a serial port interface 942 that is coupled to bus 906, but may be connected by other interfaces, such as a parallel port, game port, or a universal serial bus (USB).

A display device 944 (e.g., a monitor) is also connected to bus 906 via an interface, such as a video adapter 946. In an example, computer 900 includes other peripheral output devices (e.g., speakers or a printer), in addition to display device 944.

Computer 900 is connected to a network 948 (e.g., the Internet) through a network interface 950 (e.g., a network adapter), a modem 952, or other means for establishing communications over the network. Modem 952 is connected to bus 906 via serial port interface 942. In an example, modem 952 is incorporated into the computer. In another example, modem 952 is external to computer 900.

As used herein, the terms "computer program medium" and "computer-readable storage medium" are used to generally refer to media (e.g., non-transitory media) such as the hard disk associated with hard disk drive 914, removable magnetic disk 918, removable optical disk 922, as well as other media such as flash memory cards, digital video disks, random access memories (RAMs), read only memories (ROM), and the like. A computer-readable storage medium is not a signal, such as a carrier signal or a propagating signal. In an example, a computer-readable storage medium does not include a signal. Accordingly, a computer-readable storage medium does not constitute a signal per se. Such computer-readable storage media are distinguished from and non-overlapping with communication media (do not include communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Example embodiments are also directed to such communication media.

In an example, computer programs and modules (including application programs 932 and other program modules 934) are stored on the hard disk, magnetic disk, optical disk, ROM, or RAM. In another example, such computer programs are received via network interface 950 or serial port interface 942. Such computer programs, when executed or loaded by an application, enable computer 900 to implement features of embodiments discussed herein. Accordingly, such computer programs represent controllers of the computer 900.

Example embodiments are also directed to computer program products comprising software (e.g., computer-readable instructions) stored on any computer-useable medium. Such software, when executed in one or more data processing devices, causes data processing device(s) to operate as described herein. Embodiments may employ any computer-useable or computer-readable medium, known now or in the future. Examples of computer-readable mediums include, but are not limited to storage devices such as RAM, hard drives, floppy disks, CD ROMs, DVD ROMs, zip disks, tapes, magnetic storage devices, optical storage devices, MEMS-based storage devices, nanotechnology-based storage devices, and the like.

It will be recognized that the disclosed technologies are not limited to any particular computer or type of hardware. Certain details of suitable computers and hardware are well known and need not be set forth in detail in this disclosure.

### IV. Conclusion

The foregoing detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, though each embodiment need not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described.

Descriptors such as "first", "second", "third", etc. are used to reference some elements discussed herein. Such descriptors are used to facilitate the discussion of the example embodiments and do not indicate a required order of the referenced elements, unless an affirmative statement is made herein that such an order is required.
Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims, and other equivalent features and acts are intended to be within the scope of the claims.

## Claims

1. A system (102A-102M, 106A-106N, 800, 900) comprising:
a processor system (902); and
a memory (904, 908, 910) that stores computer-executable instructions that are executable by the processor system (902) to at least:
determine (202) a first number of conversation initiation events (844) in a plurality of system-generated event logs (838), the conversation initiation events (844) resulting from a particular entity initiating conversations;
determine (204) a second number of user acceptance events (842) in the plurality of system-generated event logs (838), the user acceptance events (842) resulting from acceptance of identified conversations, which are included in the conversations initiated by the particular entity;
determine (206) an acceptance ratio (866), which indicates a proportion of the conversations that are accepted, using the first number of the conversation initiation events (844) and the second number of the user acceptance events (842);
as a result of the acceptance ratio (866) being less than or equal to a threshold acceptance ratio (866), identify (208) the particular entity as a potentially malicious entity; and
as a result of the particular entity being identified as the potentially malicious entity, perform (210) a security action (870) with regard to the potentially malicious entity.

2. The system according to claim 1, wherein the conversation initiation events result from the particular entity, which is external to a designated organization, initiating the conversations with users that are included in the designated organization; and
wherein the user acceptance events result from acceptance of the identified conversations by the users that are included in the designated organization.

3. The system according to any one of claims 1 to 2, wherein the conversation initiation events result from the particular entity, which is external to a designated tenant of a message-enabled service, initiating the conversations with users that are included in the designated tenant; and
wherein the user acceptance events result from acceptance of the identified conversations by the users that are included in the designated tenant.

4. The system according to any one of claims 1 to 3, wherein the computer-executable instructions are executable by the processor system to at least:
determine that the particular entity is added to an enterprise at a time instance; and
determine the first number of the conversation initiation events, which result from the particular entity initiating the conversations with other users in the enterprise within a specified period of time that begins at the time instance; and
wherein the user acceptance events result from acceptance of the identified conversations by at least a subset of the other users in the enterprise.

5. The system according to any one of claims 1 to 4, wherein the computer-executable instructions are executable by the processor system to at least:
determine that the particular entity is added to a tenant of a message-enabled service at a time instance; and
determine the first number of the conversation initiation events, which result from the particular entity initiating the conversations with other users in the tenant within a specified period of time that begins at the time instance; and
wherein the user acceptance events result from acceptance of the identified conversations by at least a subset of the other users in the tenant.

6. The system according to any one of claims 1 to 5, wherein the computer-executable instructions are executable by the processor system further to at least:
select the plurality of system-generated event logs as a result of a plurality of respective time stamps, which are associated with the plurality of system-generated event logs, indicating a plurality of respective time instances that are included in a sliding window of time.

7. The system according to any one of claims 1 to 6, wherein the computer-executable instructions are executable by the processor system to at least:
determine that the particular entity is associated with a particular domain;
determine that a domain name of the particular domain comprises a default domain tag; and
as a result of the acceptance ratio being less than or equal to the threshold acceptance ratio and the domain name of the particular domain, which is associated with the particular entity, comprising the default domain tag, identify the particular entity as the potentially malicious entity.

8. The system according to any one of claims 1 to 7, wherein the computer-executable instructions are executable by the processor system to at least:
identify a keyword in a presented name of the particular entity;
determine that the keyword corresponds to a reference keyword; and
as a result of the acceptance ratio being less than or equal to the threshold acceptance ratio and the keyword corresponding to the reference keyword, identify the particular entity as the potentially malicious entity.

9. The system according to any one of claims 1 to 8, wherein the computer-executable instructions are executable by the processor system to at least:
determine that a specified conversation initiation event, which is included in the conversation initiation events, results from a temporally first communication of the particular entity that is directed to a user in a particular organization; and
as a result of the acceptance ratio being less than or equal to the threshold acceptance ratio and the specified conversation initiation event resulting from the temporally first communication of the particular entity that is directed to a user in the particular organization, identify the particular entity as the potentially malicious entity.

10. The system according to any one of claims 1 to 9, wherein the computer-executable instructions are executable by the processor system to at least:
determine that a specified conversation initiation event, which is included in the conversation initiation events, results from a temporally first communication of the particular entity that is directed to a user in a particular tenant of a message-enabled service; and
as a result of the acceptance ratio being less than or equal to the threshold acceptance ratio and the specified conversation initiation event resulting from the temporally first communication of the particular entity that is directed to a user in the particular tenant, identify the particular entity as the potentially malicious entity.

11. The system according to any one of claims 1 to 10, wherein the conversation initiation events result from the particular entity initiating the conversations with users that are included in a particular organization;
wherein the user acceptance events result from acceptance of the identified conversations by the users that are included in the particular organization; and
wherein the computer-executable instructions are executable by the processor system further to at least:
determine that a likelihood of a security threat to the particular organization increases to an increased likelihood; and
as a result of the likelihood of the security threat to the particular organization increasing to the increased likelihood, increase the threshold acceptance ratio.

12. The system according to any one of claims 1 to 11, wherein the computer-executable instructions are executable by the processor system to at least:
as a result of the acceptance ratio being less than or equal to the threshold acceptance ratio and the first number being greater than or equal to a threshold number, identify the particular entity as the potentially malicious entity.

13. The system according to any one of claims 1 to 12, wherein identified conversation initiation events are associated with respective first time stamps that indicate respective first time instances at which the identified conversations are initiated;
wherein the user acceptance events are associated with respective second time stamps that indicate respective second time instances at which the identified conversations are accepted; and
wherein the computer-executable instructions are executable by the processor system to at least:
determine durations of time periods that begin at the respective first time instances indicated by the respective first time stamps and that end at the respective second time instances indicated by the respective second time stamps; and
as a result of the acceptance ratio being less than or equal to the threshold acceptance ratio and the durations of the time periods satisfying a time criterion, identify the particular entity as the potentially malicious entity.

14. The system according to any one of claims 1 to 13, wherein the computer-executable instructions are executable by the processor system to at least:
determine a third number of user denial events in the plurality of system-generated event logs, the user denial events resulting from denial of designated conversations, which are included in the conversations initiated by the particular entity;
determine a denial ratio , which indicates a proportion of the conversations that are denied, using the first number of the conversation initiation events and the third number of the user denial events; and
as a result of the acceptance ratio being less than or equal to the threshold acceptance ratio and the denial ratio being greater than or equal to a threshold denial ratio, identify the particular entity as the potentially malicious entity.

15. A method implemented by a computing system (102A-102M, 106A-106N, 800, 900), the method comprising:
determining (602) a first number of conversation initiation events (844) in a plurality of system-generated event logs (838), the conversation initiation events (844) resulting from a particular entity initiating conversations;
determining (604) a second number of user denial events (840) in the plurality of system-generated event logs (838), the user denial events (840) resulting from denial of designated conversations, which are included in the conversations initiated by the particular entity;
determining (606) a denial ratio (866), which indicates a proportion of the conversations that are denied, using the first number of the conversation initiation events (844) and the second number of the user denial events (840);
as a result of the denial ratio (866) being greater than or equal to a threshold denial ratio (866), identifying (608) the particular entity as a potentially malicious entity; and as a result of identifying the particular entity as the potentially malicious entity, performing (610) a security action (870) with regard to the potentially malicious entity.
